# EUROPEAN PATENT APPLICATION

(11) **EP 3 787 073 A1**
(43) Date of publication of application: **03.03.2021**
(21) Application number: 18916669.7
(22) Date of filing: 23.04.2018
(51) Int. Cl.: H01M 4/36, H01M 4/485, H01M 4/505, H01M 4/525, H01M 10/052

(54) **LITHIUM ION SECONDARY BATTERY**

(71) Applicant: Murata Manufacturing Co., Ltd., Nagaokakyo-shi, Kyoto 617-8555 (JP); HYDRO-QUEBEC, Montréal, Québec H2Z 1A4 (CA)
(72) Inventor: ASAKAWA, Yuichiro, Nagaokakyo-shi, Kyoto 617-8555 (JP); UESAKA Shinichi, Nagaokakyo-shi, Kyoto 617-8555 (JP); LAFLEUR-LAMBERT Antoine, Quebec, J3X 1S1 (CA); ZAGHIB Karim, Quebec, J3X 1S1 (CA)
(74) Representative: Witte, Weller & Partner Patentanwälte mbB
(86) International application number: PCT/JP2018/016405
(87) International publication number: WO 2019/207616

(57) **Abstract**

A lithium ion secondary battery includes an electrolytic solution together with a positive electrode and a negative electrode. At least one of the positive electrode and the negative electrode includes a plurality of active material particles and a coating film that covers an entire surface of at least one of the plurality of active material particles. The coating film contains at least one of a first pyrrole compound, a second pyrrole compound and a third pyrrole compound.

## Description

### TECHNICAL FIELD

The present technology relates to a lithium ion secondary battery provided with an electrolytic solution together with a positive electrode and a negative electrode.

### BACKGROUND ART

As a result of widespread use of various electronic apparatuses, development of a lithium ion secondary battery, as a power source, which is small in size, light in weight, and capable of obtaining a high energy density has been promoted.

The lithium ion secondary battery includes an electrolytic solution together with a positive electrode and a negative electrode. Since a configuration of the lithium ion secondary battery greatly influences a battery characteristic, various studies have been given to the configuration of the lithium ion secondary battery.

Specifically, in order to suppress elution of manganese from a manganate positive electrode active material, a polymerizable compound such as pyrrole is oxidatively polymerized, whereby a conductive polymer is formed so as to cover a surface of the positive electrode active material (see, for example, Patent Document 1).

Further, in order to improve adhesion of a positive electrode mixture layer, a positive electrode paste is used in a manufacturing process of a positive electrode plate. This positive electrode paste contains a pigment derivative dispersant such as a diketopyrrolopyrrole pigment derivative as a dispersant for dispersing the carbon-based conductive material (see, for example, Patent Document 2).

### PRIOR ART DOCUMENTS

### PATENT DOCUMENTS

Patent Document 1: Japanese Patent Application Laid-Open No. 2002-358959
Patent Document 2: Japanese Patent Application Laid-Open No. 2013-089485

### SUMMARY OF THE INVENTION

An electronic apparatus on which a lithium ion secondary battery is to be mounted is increasingly gaining higher performance and more functions. For this reason, frequency of use of an electronic apparatus is increasing, and a usage environment of the electronic apparatus is expanding. Therefore, there is still a room for improvement in battery characteristics of a lithium ion secondary battery.

The present technology has been made in view of such problems, and an object thereof is to provide a lithium ion secondary battery capable of obtaining excellent battery characteristics.

The lithium ion secondary battery of the present technology is provided with an electrolytic solution together with a positive electrode and a negative electrode. At least one of the positive electrode and the negative electrode includes a plurality of active material particles and a coating film that covers an entire surface of at least one of the plurality of active material particles. The coating film contains at least one of a first pyrrole compound represented by Formula (1), a second pyrrole compound represented by Formula (2), and a third pyrrole compound represented by Formula (3). 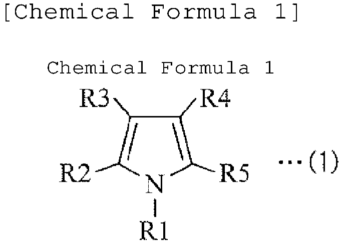 wherein each of R1, R2, R3, R4 and R5 is any one of a hydrogen group, a monovalent hydrocarbon group, a monovalent oxygen-containing hydrocarbon group and a monovalent heterocyclic group. 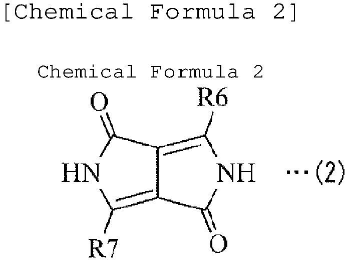 wherein each of R6 and R7 is any one of a hydrogen group, a monovalent hydrocarbon group, a monovalent oxygen-containing hydrocarbon group and a monovalent heterocyclic group. 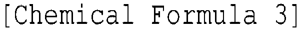 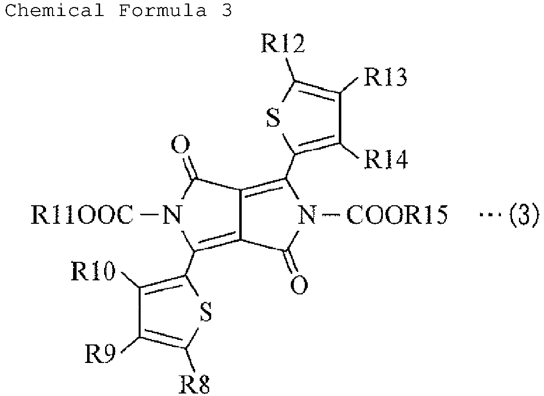 wherein each of R8, R9, R10, R12, R13 and R14 is any one of a hydrogen group, a monovalent hydrocarbon group, a monovalent oxygen-containing hydrocarbon group and a monovalent heterocyclic group, and each of R11 and R15 is either a hydrogen group or a monovalent hydrocarbon group.

According to the lithium ion secondary battery of the present technology, in at least one of the positive electrode and the negative electrode, a coating film that covers an entire surface of at least one of the plurality of active material particles contains at least one of the first pyrrole compound, the second pyrrole compound and the third pyrrole compound, so that excellent battery characteristics can be obtained.

It should be understood that effects of the present technology are not necessarily limited to the effects described here, and may be any one of a series of effects relating to the present technology described later.

### BRIEF EXPLANATION OF DRAWINGS

FIG. 1 is a sectional view illustrating a configuration of a lithium ion secondary battery (cylindrical type) of an embodiment of the present technology.
FIG. 2 is an enlarged sectional view illustrating a configuration of a main part of the lithium ion secondary battery shown in FIG. 1.
FIG. 3 is a sectional view schematically illustrating a detailed configuration of each of a positive electrode and a negative electrode.
FIG. 4 is a sectional view schematically illustrating another detailed configuration of each of a positive electrode and a negative electrode. FIG. 5 is a sectional view schematically illustrating still another detailed configuration of each of a positive electrode and a negative electrode.
FIG. 6 is a sectional view for explaining a configuration of a lithium ion secondary battery (positive electrode and negative electrode) of Comparative Example 1.
FIG. 7 is a sectional view for explaining a configuration of a lithium ion secondary battery (positive electrode and negative electrode) of Comparative Example 2.
FIG. 8 is a sectional view for explaining a configuration of a lithium ion secondary battery (positive electrode and negative electrode) of Comparative Example 3.
FIG. 9 is a perspective view illustrating a configuration of another lithium ion secondary battery (laminated film type) of an embodiment of the present technology.
FIG. 10 is a sectional view illustrating a configuration of a main part of the lithium ion secondary battery shown in FIG. 9.

### MODE FOR CARRYING OUT THE INVENTION

Hereinafter, an embodiment of the present technology will be described in detail with reference to drawings. It should be understood that the order of description is as follows.
1. Lithium Ion Secondary Battery (Cylindrical Type)
   1-1. Overall Configuration
   1-2. Detailed Configurations of Positive Electrode and Negative Electrode
   1-3. Operation
   1-4. Manufacturing Method
   1-5. Action and Effect
2. Lithium Ion Secondary Battery (Laminated Film Type)
   2-1. Configuration
   2-2. Operation
   2-3. Manufacturing Method
   2-4. Action and Effect
3. Modified Example
4. Application of Lithium Ion Secondary Battery

### <1. Lithium Ion Secondary Battery (Cylindrical Type)>

First, a lithium ion secondary battery of an embodiment of the present technology will be described.

The lithium ion secondary battery described here is, for example, a secondary battery in which a battery capacity (a capacity of a negative electrode 22 which will be described later) is obtained by utilizing a lithium (Li) storage phenomenon and a lithium release phenomenon.

### <1-1. Overall Configuration>

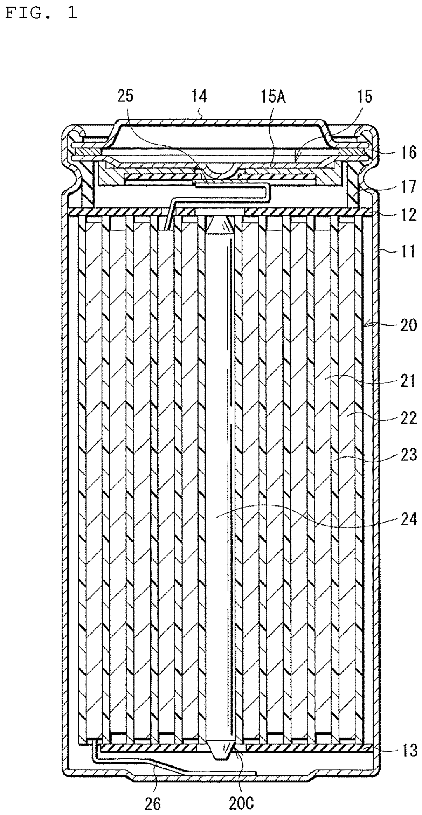

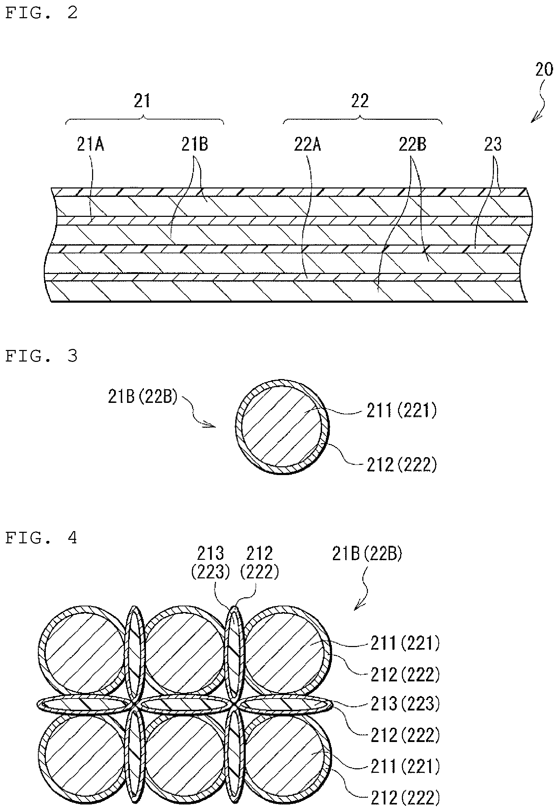

FIG. 1 illustrates a sectional configuration of a lithium ion secondary battery, and FIG. 2 enlarges a sectional configuration of a main part (wound electrode body 20) of the lithium ion secondary battery shown in FIG. 1. It should be understood that FIG. 2 shows only a portion of the wound electrode body 20 is shown.

As shown in FIG. 1, for example, the lithium ion secondary battery is a cylindrical-type lithium ion secondary battery in which a wound electrode body 20 which is a battery device is accommodated inside a cylindrical battery can 11.

Specifically, the lithium ion secondary battery includes, for example, a pair of insulating plates 12 and 13 and the wound electrode body 20 inside the battery can 11. The wound electrode body 20 is, for example, a wound body formed by winding a positive electrode 21 and a negative electrode 22 which are stacked on each other with a separator 23 interposed therebetween, and the wound electrode body 20 is impregnated with an electrolytic solution which is a liquid electrolyte.

The battery can 11 has, for example, a hollow structure in which one end is closed and the other end is open, and contains, for example, any one or two or more types of conductive materials such as iron (Fe), aluminum (Al) and alloys thereof. A surface of the battery can 11 may be plated with, for example, nickel (Ni). The insulating plates 12 and 13 are arranged, for example, so as to sandwich the wound electrode body 20 therebetween. Each of the insulating plates 12 and 13 extends, for example, in a direction intersecting a winding peripheral surface of the wound electrode body 20.

At the open end of the battery can 11, for example, a battery cover 14, a safety valve mechanism 15, and a heat sensitive resistance element (PTC element) 16 are crimped with a gasket 17 interposed therebetween. As a result, the open end of the battery can 11 is sealed. The battery cover 14 contains, for example, a material similar to a material for forming the battery can 11. Each of the safety valve mechanism 15 and the heat sensitive resistance element 16 is provided on inner side of the battery cover 14, and the safety valve mechanism 15 is electrically connected to the battery cover 14 with the heat sensitive resistance element 16 interposed therebetween. In this safety valve mechanism 15, for example, when an internal pressure of the battery can 11 becomes equal to or higher than a certain level due to an internal short circuit, external heating, and the like, a disk plate 15A is inverted, so that electrical connection between the battery cover 14 and the wound electrode body 20 is disconnected. In order to prevent abnormal heat generation due to a large current, electrical resistance of the heat sensitive resistance element 16 increases with an increase in temperature. The gasket 17 contains, for example, an insulating material, and for example, asphalt or the like may be applied to a surface of the gasket 17.

For example, a center pin 24 is inserted into a space 20C provided at a winding center of the wound electrode body 20. It should be understood that the center pin 24 may be omitted. A positive electrode lead 25 is connected to the positive electrode 21, and the positive electrode lead 25 contains, for example, any one or two or more types of conductive materials such as aluminum. The positive electrode lead 25 is electrically connected to the battery cover 14 with, for example, the safety valve mechanism 15 interposed therebetween. A negative electrode lead 26 is connected to the negative electrode 22, and the negative electrode lead 26 contains, for example, any one or two or more types of conductive materials such as nickel. The negative electrode lead 26 is electrically connected to, for example, the battery can 11.

### [Positive Electrode]

As shown in FIG. 2, the positive electrode 21 includes, for example, a positive electrode current collector 21A and two positive electrode active material layers 21B provided on both sides of the positive electrode current collector 21A. It should be understood that the positive electrode 21 may include, for example, only one positive electrode active material layer 21B provided on one side of the positive electrode current collector 21A.

### (Positive electrode current collector)

The positive electrode current collector 21A contains, for example, any one or two or more types of conductive materials such as aluminum, nickel, and stainless steel. The positive electrode current collector 21A may be a single layer or a multilayer.

### (Positive electrode active material layer)

The positive electrode active material layer 21B contains, as a positive electrode active material, any one or two or more types of positive electrode materials capable of storing and releasing lithium. The positive electrode active material layer 21B may be a single layer or a multilayer. It should be understood that the positive electrode active material layer 21B may further contain any one or two or more types of other materials such as the positive electrode binder and the positive electrode conductive agent.

The positive electrode material contains, for example, a lithium-containing compound. This is because a high energy density can be obtained. The lithium-containing compound is not particularly limited in its type, but is, for example, a lithium-containing composite oxide, a lithium-containing phosphate compound, or the like.

The lithium-containing composite oxide is a generic term for oxides containing lithium and one or two or more types of other elements as constituent elements, and has, for example, a crystal structure of any one of layered rock salt type, spinel type and the like. In addition, the lithium-containing phosphate compound is a generic term for phosphate compounds containing lithium and one or two or more types of other elements as constituent elements, and has, for example, a crystal structure of olivine type or the like.

The other elements are elements other than lithium. The other elements are not particularly limited in their types, but in particular, it is preferable that the other elements are elements belonging to any of Groups 2 to 15 of the long periodic table. This is because a high voltage can be obtained. Specifically, the other elements are, for example, nickel, cobalt (Co), manganese (Mn), iron, and the like.

The lithium-containing composite oxide having the crystal structure of the layered rock salt type is, for example, LiNiO₂, LiCoO₂, LiCo_{0.98}Al_{0.01}Mg_{0.01}O₂, LiNi_{0.5}Co_{0.2}Mn_{0.3}O₂, LiNi_{0.8}Co_{0.15}Al_{0.05}O₂, LiNi_{0.33}Co_{0.33}Mn_{0.33}O₂, Li_{1.2}Mn_{0.52}Co_{0.175}Ni_{0.1}O₂, Li_{1.15}(Mn_{0.65}Ni_{0.22}Co_{0.13})O₂, or the like. The lithium-containing composite oxide having the crystal structure of the spinel type is, for example, LiMn₂O₄ or the like. The lithium-containing phosphate compound having the crystal structure of the olivine type is, for example, LiFePO₄, LiMnPO₄, LiFe_{0.5}Mn_{0.5}PO₄, LiFe_{0.3}Mn_{0.7}PO₄, or the like.

Among them, the positive electrode material preferably contains a ternary composite oxide. The ternary composite oxide is, for example, a generic term for oxides (lithium-containing composite oxide) that have three types of metal elements (nickel, cobalt, and manganese) together with lithium as constituent elements and has the crystal structure of the layered rock salt type. This is because a decomposition reaction of the electrolytic solution is further suppressed by using the ternary composite oxide in combination with a pyrrole compound described later. Here, the ternary composite oxide is a "second composite oxide" of an embodiment of the present technology.

The ternary composite oxide is, for example, Li_{1.15}(Mn_{0.65}Ni_{0.22}Co_{0.13})O₂, LiNi_{0.33}Co_{0.33}Mn_{0.33}O₂, or the like.

The positive electrode binder contains, for example, any one or two or more types of synthetic rubbers and polymer compounds. The synthetic rubber is, for example, styrene-butadiene rubber, fluorine rubber, ethylene propylene diene, or the like. The polymer compound is, for example, polyvinylidene fluoride, polyimide, or the like.

The positive electrode conductive agent contains, for example, any one or two or more types of conductive materials such as carbon materials. The carbon material is, for example, graphite, carbon black, acetylene black, ketjen black, or the like. It should be understood that the positive electrode conductive agent may be a metal material, a conductive polymer or the like as long as it is a conductive material.

### [Negative Electrode]

As shown in FIG. 2, the negative electrode 22 includes, for example, a negative electrode current collector 22A and two negative electrode active material layers 22B provided on both sides of the negative electrode current collector 22A. It should be understood that the negative electrode 22 may include, for example, only one negative electrode active material layer 22B provided on one side of the negative electrode current collector 22A.

### (Negative electrode current collector)

The negative electrode current collector 22A contains, for example, any one or two or more types of conductive materials such as copper (Cu), aluminum, nickel, and stainless steel. The negative electrode current collector 22A may be a single layer or a multilayer.

The surface of the negative electrode current collector 22A is preferably roughened using electrolytic method or the like. This is because a so-called anchor effect is used to improve adhesion of the negative electrode active material layer 22B to the negative electrode current collector 22A.

### (Negative electrode active material layer)

The negative electrode active material layer 22B contains, as a negative electrode active material, any one or two or more types of negative electrode materials capable of storing and releasing lithium. The negative electrode active material layer 22B may be a single layer or multilayer. It should be understood that the negative electrode active material layer 22B may further contain any one or two or more types of other materials such as the negative electrode binder and the negative electrode conductive agent.

In order to prevent lithium metal from being unintentionally deposited on a surface of the negative electrode 22 during charging, it is preferable that a capacity of the chargeable negative electrode material is greater than a discharge capacity of the positive electrode 21. More specifically, it is preferable that electrochemical equivalent of the negative electrode material is greater than electrochemical equivalent of the positive electrode 21.

The negative electrode material contains, for example, a carbon material, a metal-based material and a lithium-containing compound, and the like.

The carbon material is a generic term for materials containing carbon as a constituent element. This is because a crystal structure of the carbon material hardly changes at the time of storing lithium and at the time of releasing lithium, and thus a high energy density can be stably obtained. Further, this is because the carbon material also functions as a negative electrode conductive agent, and thus conductivity of the negative electrode active material layer 22B is improved.

The carbon material is, for example, graphitizable carbon, non-graphitizable carbon, graphite, or the like. It should be understood that plane spacing of a (002) plane in the non-graphitizable carbon is preferably 0.37 nm or more, and plane spacing of a (002) plane in the graphite is preferably 0.34 nm or less.

More specifically, the carbon material is, for example, pyrolytic carbons, cokes, glassy carbon fiber, organic polymer compound fired body, activated carbon, carbon blacks, or the like. The cokes include, for example, pitch cokes, needle cokes and petroleum cokes, and the like. The organic polymer compound fired body is a fired product obtained by firing (carbonizing) a polymer compound such as a phenol resin and a furan resin at an appropriate temperature. In addition, the carbon material may be, for example, low crystalline carbon heat-treated at a temperature of about 1000°C or less, or amorphous carbon. The shape of the carbon material is, for example, a fibrous, spherical, granular, scale-like shape, or the like.

The metal-based material is a generic term for materials containing any one or two or more types of metal elements and metalloid elements as constituent elements. This is because a high energy density can be obtained. It should be understood that a material corresponding to the lithium-containing compound is excluded from the metal-based material described here.

The metal-based material may be a simple substance, an alloy, a compound, a mixture of two or more types thereof, or a material containing one or two or more types of phases thereof. It should be understood that the alloy includes not only materials composed of two or more types of metal elements but also materials containing one or two or more types of metal elements and one or two or more types of metalloid elements. Further, the alloy may contain one or two or more types of non-metal elements. The structure of the metal-based material is, for example, a solid solution, a eutectic (eutectic mixture), an intermetallic compound, and one in which two or more types thereof coexist, or the like.

Each of the metal element and the metalloid element can form an alloy with lithium. The metal element and the metalloid element are specifically, for example, magnesium (Mg), boron (B), aluminum, gallium (Ga), indium (In), silicon (Si), germanium (Ge), tin (Sn), lead (Pb), bismuth (Bi), cadmium (Cd), silver (Ag), zinc (Zn), hafnium (Hf), zirconium (Zr), yttrium (Y), palladium (Pd), platinum (Pt), or the like.

Among them, silicon and tin are preferable, and silicon is more preferable. This is because the lithium storage capacity is excellent and also the lithium release capacity is excellent, and thus a remarkably high energy density can be obtained.

Specifically, the metal-based material may be a simple substance of silicon, an alloy of silicon, a compound of silicon, a simple substance of tin, an alloy of tin, or a compound of tin, a mixture of two or more types thereof, or a material containing one or two or more types of phases thereof. Since the "simple substance" described here means a general simple substance, the simple substance may contain a trace amount of impurities. That is, purity of the simple substance is not necessarily limited to 100%.

The alloy of silicon contains, for example, any one or two or more types of tin, nickel, copper, iron, cobalt, manganese, zinc, indium, silver, titanium (Ti), germanium, bismuth, antimony (Sb), chromium (Cr) and the like, as constituent elements other than silicon. The compound of silicon contains, for example, any one or two or more types of carbon (C), oxygen (O) and the like, as constituent elements other than silicon. It should be understood that the compound of silicon may include, for example, any one or two or more types of the series of constituent elements described related to the alloy of silicon, as constituent elements other than silicon.

The alloy of silicon and the compound of silicon are, for example, SiB₄, SiB₆, Mg₂Si, Ni₂Si, TiSi₂, MoSi₂, CoSi₂, NiSi₂, CaSi₂, CrSi₂, Cu₅Si, FeSi₂, MnSi₂, NbSi₂, TaSi₂, VSi₂, WSi₂, ZnSi₂, SiC, Si₃N₄, Si₂N₂O, SiOᵥ (0 < v ≤ 2), or the like. It should be understood that a range of v may be, for example, 0.2 < v <1.4.

The alloy of tin contains, for example, any one or two or more types of silicon, nickel, copper, iron, cobalt, manganese, zinc, indium, silver, titanium, germanium, bismuth, antimony, chromium, and the like, as constituent elements other than tin. The compound of tin contains, for example, any one or two or more types of carbon, oxygen, and the like, as constituent elements other than tin. It should be understood that the compound of tin may contain, for example, any one or two or more types of the series of constituent elements described related to the alloy of tin, as constituent elements other than tin.

The alloy or compound of tin is, for example, SnO_{w} (0 < w ≤ 2), SnSiO₃, Mg₂Sn, or the like.

The lithium-containing compound is, for example, a lithium-containing composite oxide. The lithium-containing composite oxide is not particularly limited in its type, but is, for example, a lithium titanium-containing composite oxide or the like. The lithium-titanium-containing composite oxide is a generic term for oxides containing lithium and titanium as constituent elements, and may further contain one or two or more types of other elements as constituent elements. The other elements are elements other than lithium and titanium, and details of the other elements are as described above. This is because a high energy density can be obtained. Here, the lithium-titanium-containing composite oxide is the "first composite oxide" of an embodiment of the present technology.

Specifically, the lithium titanium-containing composite oxide is, for example, Li_{3.75}Ti_{4.875}Mg_{0.375}O₁₂, LiCrTiO₄, Li₄Ti₅O₁₂, Li₄Ti_{4.95}Nb_{0.05}O₁₂, or the like.

Among them, the negative electrode material preferably contains a lithium titanium-containing composite oxide. This is because a decomposition reaction of the electrolytic solution is further suppressed by using the lithium titanium-containing composite oxide in combination with the pyrrole compound described later.

Moreover, it is preferable that the negative electrode material contains both the carbon material and the metal-based material for a reason described below.

The metal-based material, especially, a material containing silicon as a constituent element and a material containing tin as a constituent element have an advantage of having a high theoretical capacity, whereas they have a concern that they are likely to drastically expand and contract during charging and discharging. On the other hand, the carbon material has a concern that it has a low theoretical capacity, whereas it has an advantage that it is unlikely to expand and contract during charging and discharging. Accordingly, by using the carbon material and the metal-based material together, expansion and contraction of the negative electrode active material layer 22B during charging and discharging are suppressed while a high theoretical capacity (that is, battery capacity) is obtained.

Details of the negative electrode binder are, for example, similar to the details of the positive electrode binder. Details of the negative electrode conductive agent are, for example, similar to the details of the positive electrode conductive agent.

A method for forming the negative electrode active material layer 22B is not particularly limited, but is, for example, any one or two or more types of a coating method, a vapor phase method, a liquid phase method, a thermal spraying method, and a firing method (sintering method), and the like. The coating method is, for example, a method of applying to the negative electrode current collector 22A, a solution in which a mixture of a negative electrode active material in the form of particles (powder), a negative electrode binder and the like is dissolved or dispersed by an organic solvent or the like. The vapor phase method is, for example, a physical deposition method, a chemical deposition method or the like, and is more specifically, a vacuum vapor deposition method, a sputtering method, an ion plating method, a laser ablation method, a thermal chemical vapor deposition, a chemical vapor deposition method (CVD), a plasma chemical vapor deposition, or the like. The liquid phase method is, for example, an electrolytic plating method, an electroless plating method, or the like. The thermal spraying method is a method of spraying the negative electrode active material in a molten state or a semi-molten state onto the negative electrode current collector 22A. The firing method is, for example, a method of applying a solution to the negative electrode current collector 22A using a coating method, and then heat treating the solution (a coating film) at a temperature higher than a melting point of the negative electrode binder or the like, and more specifically, the firing method is an atmosphere firing method, a reaction firing method, a hot press firing method, or the like.

### [Separator]

As shown in FIG. 2, the separator 23 is, for example, interposed between the positive electrode 21 and the negative electrode 22, and allows lithium ions to pass therethrough while preventing short circuit caused by contact of both electrodes.

This separator 23 contains, for example, any one or two or more types of porous films of a synthetic resin, ceramic or the like, and may be a laminated film in which two or more types of porous films are stacked on each other. The synthetic resin is, for example, polytetrafluoroethylene, polypropylene, polyethylene, or the like.

In particular, the separator 23 may include, for example, the above-mentioned porous film (substrate layer) and a polymer compound layer provided on one side or both sides of the base layer. This is because adhesion of the separator 23 to the positive electrode 21 is improved and adhesion of the separator 23 to the negative electrode 22 is improved, and thus the wound electrode body 20 is less likely to be distorted. As a result, the decomposition reaction of the electrolytic solution is suppressed, and leakage of the electrolytic solution impregnated in the substrate layer is also suppressed, so that electrical resistance of the lithium ion secondary battery is unlikely to rise even when charge and discharge are repeated, and the lithium ion secondary battery is less likely to swell.

The polymer compound layer contains, for example, any one or two or more types of polymer compounds such as polyvinylidene fluoride. This is because it has excellent physical strength and is electrochemically stable. It should be understood that the polymer compound layer may contain any one or two or more types of insulating particles such as an inorganic particle. This is because safety is improved. The inorganic particle is not particularly limited in its type, but is, for example, aluminum oxide, aluminum nitride, or the like.

### [Electrolytic Solution]

The electrolytic solution is impregnated into the wound electrode body 20, as described above. Therefore, for example, the electrolytic solution is impregnated into the separator 23, and is also impregnated into each of the positive electrode 21 and the negative electrode 22.

This electrolytic solution contains a solvent and an electrolyte salt. The type of solvent may be only one type or two or more types, and the type of electrolyte salt may be only one type or two or more types. It should be understood that the electrolytic solution may contain any one or two or more types of various additives, together with the solvent and the electrolyte salt.

### (Solvent)

The solvent contains, for example, a non-aqueous solvent (organic solvent), and the electrolytic solution containing the non-aqueous solvent is a so-called non-aqueous electrolytic solution. The non-aqueous solvent is, for example, a carbonate ester, a chain carboxylate ester, a lactone, and a nitrile (mononitrile) compound. This is because excellent battery capacity, cycle characteristics, storage characteristics and the like can be obtained.

The carbonate ester contains, for example, one or both of a cyclic carbonate ester and a chain carbonate ester. The cyclic carbonate ester is, for example, ethylene carbonate, propylene carbonate, butylene carbonate or the like, and the chain carbonate ester is, for example, dimethyl carbonate, diethyl carbonate, ethyl methyl carbonate, methyl propyl carbonate or the like. The chain carboxylate ester is, for example, methyl acetate, ethyl acetate, methyl propionate, ethyl propionate, propyl propionate, methyl butyrate, methyl isobutyrate, methyl trimethylacetate, ethyl trimethylacetate, or the like. The lactone is, for example, γ-butyrolactone, γ-valerolactone, or the like. The nitrile compound is, for example, acetonitrile, methoxyacetonitrile, 3-methoxypropionitrile, or the like.

Moreover, the non-aqueous solvent may be, for example, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, N,N-dimethylformamide, N-methylpyrrolidinone, N-methyloxazolidinone, N,N'-dimethylimidazolidinone, nitromethane, nitroethane, sulfolane, trimethyl phosphate, or dimethylsulfoxide. This is because similar advantages can be obtained.

Among them, the non-aqueous solvent preferably contains a carbonate ester, and specifically, more preferably contains any one or two or more types of ethylene carbonate, propylene carbonate, dimethyl carbonate, diethyl carbonate, ethyl methyl carbonate, and the like. This is because high battery capacity, excellent cycle characteristics, excellent storage characteristics and the like can be obtained.

More specifically, the carbonate ester preferably contains both of a cyclic carbonate ester and a chain carbonate ester. In this case, a combination of a high viscosity (high dielectric constant) solvent (e.g., relative permittivity ε ≥ 30) such as ethylene carbonate or propylene carbonate and a low viscosity solvent such as dimethyl carbonate, ethyl methyl carbonate or diethyl carbonate (e.g., viscosity ≤ 1 mPa•s) is more preferable. This is because a dissociation property of the electrolyte salt and mobility of ions and the like are improved.

In particular, the non-aqueous solvent preferably contains any one or two or more types of unsaturated cyclic carbonate ester, halogenated carbonate ester, sulfonate ester, acid anhydride, polyvalent nitrile compound, diisocyanate compound, phosphate ester, and the like. This is because chemical stability of the electrolytic solution is improved. It should be understood that the content of each of the unsaturated cyclic carbonate ester, halogenated carbonate ester, sulfonate ester, acid anhydride, polyvalent nitrile compound, diisocyanate compound and phosphate ester in the electrolytic solution is not particularly limited.

The unsaturated cyclic carbonate ester is a cyclic carbonate ester having one or two or more carbon-carbon unsaturated bonds (carbon-carbon double bond). The unsaturated cyclic carbonate ester is, for example, vinylene carbonate (1,3-dioxol-2-one), vinyl ethylene carbonate (4-vinyl-1,3-dioxolan-2-one), methylene ethylene carbonate (4-methylene-1,3-dioxolan-2-one) or the like.

The halogenated carbonate ester is a carbonate ester containing one or two or more halogens as constituent elements. The halogenated carbonate ester may be, for example, cyclic or chain. The halogen is not particularly limited in its type, but is, for example, any one or two or more types of fluorine (F), chlorine (Cl), bromine (Br) and iodine (I). The cyclic halogenated carbonate ester is, for example, 4-fluoro-1,3-dioxolan-2-one, 4,5-difluoro-1,3-dioxolan-2-one, or the like. The chain halogenated carbonate ester is, for example, fluoromethyl methyl carbonate, bis(fluoromethyl)carbonate, difluoromethyl methyl carbonate, or the like.

The sulfonate ester is, for example, a monosulfonate ester or a disulfonate ester. It should be understood that the monosulfonate ester may be a cyclic monosulfonate ester or a chain monosulfonate ester. Moreover, the disulfonate ester may be a cyclic disulfonate ester or a chain disulfonate ester. The cyclic monosulfonate ester is, for example, 1,3-propene sultone or the like.

The acid anhydride is, for example, carboxylic acid anhydride, disulfonic acid anhydride, carboxylic acid sulfonic acid anhydride, or the like. The carboxylic acid anhydride is, for example, succinic anhydride, glutaric anhydride, maleic anhydride, or the like. The disulfonic acid anhydride is, for example, ethanedisulfonic anhydride, propanedisulfonic anhydride, or the like. The carboxylic acid sulfonic acid anhydride is, for example, sulfobenzoic anhydride, sulfopropionic anhydride, sulfobutyric anhydride, or the like.

The polyvalent nitrile compound is a compound having two or more nitrile groups (-CN). The polyvalent nitrile compound is, for example, succinonitrile (NC-C₂H₄-CN), glutaronitrile (NC-C₃H₆-CN), adiponitrile (NC-C₄H₈-CN), sebaconitrile (NC-C₈H₁₀-CN), phthalonitrile (NC-C₆H₄-CN), or the like.

The diisocyanate compound is a compound having two isocyanate groups (-NCO). The diisocyanate compound is, for example, OCN-C₆H₁₂-NCO or the like.

The phosphate ester is, for example, trimethyl phosphate, triethyl phosphate, triallyl phosphate, or the like.

### (Electrolyte salt)

The electrolyte salt is, for example, any one or two or more types of lithium salts. It should be understood that the electrolyte salt may include, for example, a salt other than the lithium salt, together with the lithium salt. The salt other than the lithium salt is, for example, a salt of a light metal other than lithium or the like.

The lithium salt is, for example, lithium hexafluorophosphate (LiPF₆), lithium tetrafluoroborate (LiBF₄), bis(fluorosulfonyl)amide lithium (LiN(SO₂F)₂), bis(trifluoromethanesulfonyl)amide lithium (LiN(CF₃SO₂)₂), lithium difluorophosphate (LiPF₂O₂), lithium fluorophosphate (Li₂PFO₃), or the like.

The content of the electrolyte salt is not particularly limited, but is, for example, 0.3 mol/kg to 3.0 mol/kg with respect to the solvent.

### <1-2. Detailed Configurations of Positive Electrode and Negative Electrode>

Each of FIGS. 3 to 5 schematically illustrates a detailed sectional configuration of each of the positive electrode 21 and the negative electrode 22. Hereinafter, reference will be made to FIG. 2 already described, as needed.

### [Detailed Configuration of Positive Electrode]

As shown in FIG. 3, for example, the positive electrode 21 (positive electrode active material layer 21B) includes a plurality of active material particles (positive electrode active material particles 211) and a coating film (positive electrode coating film 212). It should be understood that in FIG. 3, only one positive electrode active material particle 211 is shown in order to simplify the illustration.

### (Plurality of positive electrode active material particles)

The plurality of positive electrode active material particles 211 are a plurality of particulate positive electrode active materials, and details of the positive electrode active material are as described above. Three-dimensional shape of the positive electrode active material particle 211 is not particularly limited. In FIG. 3, for example, a case where the three-dimensional shape of the positive electrode active material particle 211 is spherical is shown.

### (Positive electrode coating film)

The positive electrode coating film 212 is provided on the surfaces of the plurality of positive electrode active material particles 211 and protects the surface of the positive electrode active material particle 211.

### (Composition of positive electrode coating film)

The positive electrode coating film 212 contains any one or two or more types of pyrrole compounds. The pyrrole compound is a heterocyclic compound having a nitrogen atom (N) as a hetero atom. It should be understood that the number of heterocycles contained in the pyrrole compound may be only one, or may be two or more.

Specifically, the pyrrole compound contains any one or two or more types of a first pyrrole compound represented by Formula (1), a second pyrrole compound represented by Formula (2), and a third pyrrole compound represented by Formula (3). It should be understood that the type of each of the first pyrrole compound, the second pyrrole compound and the third pyrrole compound may be only one type or two or more types. 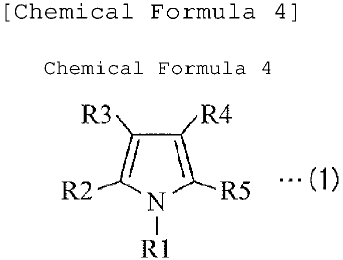 wherein each of R1, R2, R3, R4 and R5 is any one of a hydrogen group, a monovalent hydrocarbon group, a monovalent oxygen-containing hydrocarbon group and a monovalent heterocyclic group. 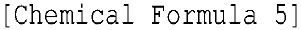 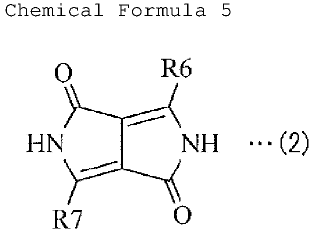 wherein each of R6 and R7 is any one of a hydrogen group, a monovalent hydrocarbon group, a monovalent oxygen-containing hydrocarbon group and a monovalent heterocyclic group. 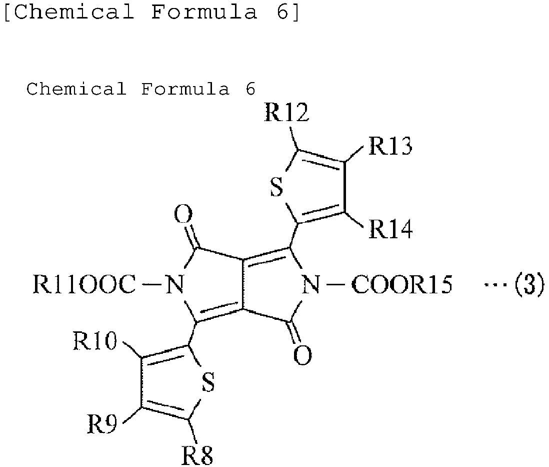 wherein each of R8, R9, R10, R12, R13 and R14 is any one of a hydrogen group, a monovalent hydrocarbon group, a monovalent oxygen-containing hydrocarbon group and a monovalent heterocyclic group, and each of R11 and R15 is either a hydrogen group or a monovalent hydrocarbon group.

The first pyrrole compound is pyrrole and its derivatives. The type of the first pyrrole compound is not particularly limited as long as it has the structure represented by Formula (1), and thus the first pyrrole compound may be pyrrole or a derivative of pyrrole.

The second pyrrole compound is diketopyrrolopyrrole and its derivatives. The type of the second pyrrole compound is not particularly limited as long as it has the structure represented by Formula (2), and thus the second pyrrole compound may be diketopyrrolopyrrole or a derivative of diketopyrrolopyrrole.

The third pyrrole compound is a compound in which two thiophene skeletons and two carboxylate ester groups are introduced into diketopyrrolopyrrole (hereinafter, referred to as "thiophene-introduced diketopyrrolopyrrole") and its derivative. As long as it has the structure represented by Formula (3), the type of the third pyrrole compound is not particularly limited, so the third pyrrole compound may be a thiophene-introduced diketopyrrolopyrrole or a derivative of a thiophene-introduced diketopyrrolopyrrole.

The "monovalent hydrocarbon group" for each of R1 to R10 and R12 to R14 is a generic term for monovalent groups formed by carbon (C) and hydrogen (H). Therefore, the monovalent hydrocarbon group may be linear, branched having one or two or more side chains, cyclic having one or two or more rings, or a conjugate in which two or more types thereof are bound to each other. Moreover, the monovalent hydrocarbon group may contain one or two or more carbon-carbon unsaturated bonds, or may not contain a carbon-carbon unsaturated bond. The carbon-carbon unsaturated bond is, for example, a carbon-carbon double bond and a carbon-carbon triple bond.

Specifically, the monovalent hydrocarbon group is, for example, an alkyl group, an alkenyl group, an alkynyl group, a cycloalkyl group, an aryl group, a bonding group, or the like. The bonding group is a monovalent group in which two or more types of an alkyl group, an alkenyl group, an alkynyl group, a cycloalkyl group and an aryl group are bonded to each other.

The number of carbon atoms in the alkyl group is not particularly limited, but is, for example, 1 to 3. In addition, the number of carbon atoms in each of the alkenyl group and the alkynyl group is not particularly limited, but is, for example, 2 or 3. This is because solubility and compatibility of the pyrrole compound are improved. Specifically, the alkyl group is, for example, a methyl group, an ethyl group, a propyl group, or the like. The alkenyl group is, for example, a vinyl group or the like. The alkynyl group is, for example, an acetyl group or the like.

The number of carbon atoms in each of the cycloalkyl group and the aryl group is not particularly limited, but is, for example, 3 to 8. This is because solubility and compatibility of the pyrrole compound are improved. The cycloalkyl group is, for example, a cyclopropyl group, a cyclobutyl group, a cyclopentyl group, a cyclohexyl group, or the like. The aryl group is, for example, a phenyl group, a naphthyl group, or the like.

The "monovalent oxygen-containing hydrocarbon group" for each of R1 to R10 and R12 to R14 is a generic term for monovalent groups formed by carbon, hydrogen, and oxygen (O). The monovalent oxygen-containing hydrocarbon group is, for example, a group in which one or more monovalent hydrocarbon groups and one or more oxo groups (-O-) are bonded to each other so as to be monovalent as a whole. The number of each of the monovalent hydrocarbon group and the oxo group is not particularly limited, and the bonding order of the monovalent hydrocarbon group and the oxo group is not also particularly limited. Details of the monovalent hydrocarbon group are as described above.

Specifically, the monovalent oxygen-containing hydrocarbon group is, for example, a group in which one hydrocarbon group and one oxo group are bonded to each other, that is, an alkoxy group. The number of carbon atoms in the alkoxy group is not particularly limited, but is, for example, 1 to 3. This is because solubility and compatibility of the pyrrole compound are improved. Specifically, the alkoxy group is, for example, a methoxy group, an ethoxy group, a propoxy group, or the like.

The "monovalent heterocyclic group" for each of R1 to R10 and R12 to R14 is a group in which one hydrogen group is removed from a cyclic compound (heterocycle) formed by two or more types of elements. The heterocycle may contain one or two or more carbon-carbon unsaturated bonds (carbon-carbon double bond and carbon-carbon triple bond), or may not contain the carbon-carbon unsaturated bond. The ring shape of the heterocycle is not particularly limited, and may be, for example, a 3-membered ring, a 4-membered ring, a 5-membered ring, a 6-membered ring, or a 7-membered ring or more. The hetero atom contained in the heterocycle is not particularly limited in its type, and is, for example, any one or two or more types of a nitrogen atom (N), an oxygen atom (O), a sulfur atom (S) and the like. It should be understood that a position at which the hydrogen group is eliminated from the heterocycle is not particularly limited.

Specifically, the heterocycle is, for example, the following compound. A heterocycle containing a nitrogen atom as a hetero atom is, for example, pyrrole, pyridine, or the like. A heterocycle containing an oxygen atom as a hetero atom is, for example, furan or the like. A heterocycle containing a sulfur atom as a hetero atom is, for example, thiophene or the like.

Specifically, the first pyrrole compound is, for example, pyrrole, 1-methylpyrrole, 2-methyl-1H-pyrrole, or the like.

The second pyrrole compound is, for example, diketopyrrolopyrrole, methyldiketopyrrolopyrrole, dimethyldiketopyrrolopyrrole, or the like.

The third pyrrole compound is, for example, a compound in which each of R8 to R10 and R12 to R14 is a hydrogen group and each of R11 and R15 is a monovalent hydrocarbon group (methyl group), a compound in which each of R8 to R10 and R12 to R14 is a hydrogen group and each of R11 and R15 is a monovalent hydrocarbon group (ethyl group), a compound in which each of R8 to R10 and R12 to R14 is a hydrogen group and each of R11 and R15 is a monovalent hydrocarbon group (propyl group), a compound in which each of R8 to R10 and R12 to R14 is a hydrogen group and each of R11 and R15 is a monovalent hydrocarbon group (butyl group), or the like.

It should be understood that a form (linear or branched) of the monovalent hydrocarbon group is not particularly limited as described above. Specifically, the propyl group may be, for example, a n-propyl group or an iso-propyl group. Further, the butyl group may be, for example, a n-butyl group, a sec-butyl group, an iso-butyl group, or a tert-butyl group.

The reason why the positive electrode coating film 212 contains a pyrrole compound is because, as described later, in a formation process of the positive electrode 21 (positive electrode active material layer 21B), particularly in a preparation process of a positive electrode mixture, a strong and stable positive electrode coating film 212 is easily formed on the surface of the positive electrode active material particle 211. As a result, the surface of the positive electrode active material particle 211 having high reactivity is protected by the positive electrode coating film 212, so that the electrolytic solution is less likely to be in contact with the surface of the positive electrode active material particle 211. Accordingly, a decomposition reaction of the electrolytic solution is suppressed during charging and discharging, and battery characteristics are less likely to deteriorate.

Among them, the first pyrrole compound preferably contains a compound (pyrrole) in which each of R1 to R5 in Formula (1) is a hydrogen group. The second pyrrole compound preferably contains a compound (diketopyrrolopyrrole) in which each of R6 and R7 in Formula (2) is a hydrogen group. The third pyrrole compound preferably contains a compound in which each of R8 to R10 and R12 to R14 in Formula (3) is a hydrogen group and each of R11 and R15 is a tertiary butyl group (tert-butyl group). This is because a sufficiently strong and stable positive electrode coating film 212 is likely to be formed on the surface of the positive electrode active material particle 211, and thus the decomposition reaction of the electrolytic solution is sufficiently suppressed.

Further, the positive electrode coating film 212 preferably contains the second pyrrole compound among the first pyrrole compound, the second pyrrole compound and the third pyrrole compound, so that the positive electrode coating film 212 preferably contains diketopyrrolopyrrole. This is because a remarkably strong and stable positive electrode coating film 212 is formed on the surface of the positive electrode active material particle 211, and thus the decomposition reaction of the electrolytic solution is significantly suppressed.

### (Formation range of positive electrode coating film)

Further, as shown in FIG. 3, the positive electrode coating film 212 covers the entire surface of the positive electrode active material particle 211. That is, the positive electrode coating film 212 provided on the positive electrode active material particle 211 covers the entire region of the surface of the positive electrode active material particle 211 so that the surface of the positive electrode active material particle 211 is not exposed.

The reason why the positive electrode coating film 212 covers the entire surface of the positive electrode active material particle 211 is because the surface of the positive electrode active material particle 211 is not exposed, and thus the surface of the positive electrode active material particle 211 is separated from the electrolytic solution with the positive electrode coating film 212 interposed therebetween. As a result, the electrolytic solution can be hardly in contact with the surface of the positive electrode active material particle 211 having high reactivity, so that the electrolytic solution is hardly decomposed in the surface of the positive electrode active material particle 211.

Moreover, this is because, even if the decomposition reaction of the electrolytic solution proceeds, transfer of electrons is suppressed in the vicinity of the surface of the positive electrode 21 (in the vicinity of an interface between the positive electrode 21 and the electrolytic solution). As a result, a crystal structure of the positive electrode active material particle 211 is less likely to deteriorate.

Accordingly, the decomposition reaction of the electrolytic solution during charging and discharging is significantly suppressed, and deterioration of the crystal structure of the positive electrode active material particle 211 is suppressed, so that battery characteristics are less likely to significantly deteriorate.

As described above, the reason why the entire surface of the positive electrode active material particle 211 is covered with the positive electrode coating film 212 is because, in the formation process of the positive electrode 21, particularly in the preparation process of a positive electrode mixture, it has been devised so that the positive electrode coating film 212 easily entirely covers the surface of the positive electrode active material particle 211. Details of a method for forming the positive electrode 21 will be described later.

Here, the number of the positive electrode active material particles 211 whose entire surface is covered with the positive electrode coating film 212 may be all (the total number) of the plurality of positive electrode active material particles 211, or may be a part (a predetermined number smaller than the total number) of the plurality of positive electrode active material particles of 211. That is, the positive electrode coating film 212 covers the entire surface of one or two or more of the plurality of positive electrode active material particles 211.

When the entire surface is covered with the positive electrode coating film 212 only in a predetermined number of positive electrode active material particles 211 of the plurality of positive electrode active material particles 211, in the remaining positive electrode active material particles 211, only a part of the surface may be covered with the positive electrode coating film 212, or the surface may not be covered with the positive electrode coating film 212.

This is because, even if the entire surface is covered with the positive electrode coating film 212 only in the predetermined number of positive electrode active material particles 211, the decomposition reaction of the electrolytic solution is suppressed by the positive electrode coating film 212 in the predetermined number of positive electrode active material particles 211, and thus the electrolytic solution is less likely to be decomposed as a whole of the plurality of positive electrode active material particles 211. That is, the electrolytic solution is less likely to be decomposed as compared with a case where the positive electrode coating film 212 is not provided on any of the plurality of positive electrode active material particles 211. Further, even if the positive electrode coating film 212 is provided on a predetermined number or the total number of the plurality of positive electrode active material particles 211, the electrolytic solution is less likely to be decomposed as compared with a case where the positive electrode coating film 212 covers only a part of the surface of the positive electrode active material particle 211.

### (Target for forming positive electrode coating film)

It should be understood that an object to be covered with the positive electrode coating film 212 is not limited to the plurality of positive electrode active material particles 211. The coating state of the surface of the positive electrode active material particle 211 by the positive electrode coating film 212 shown in FIG. 3 is maintained also when the positive electrode active material layer 21B contains other materials together with the positive electrode active material (the plurality of positive electrode active material particles 211).

Specifically, for example, when the positive electrode active material layer 21B further contains a positive electrode binder, as shown in FIG. 4, for example, the positive electrode active material layer 21B includes a plurality of binder particles (positive electrode binder particles 213), together with the plurality of positive electrode active material particles 211 and the positive electrode coating film 212. The plurality of positive electrode binder particles 213 are a plurality of particulate positive electrode binders, and details of the positive electrode binder are as described above. FIG. 4 shows a state in which the plurality of positive electrode active material particles 211 are bound to each other with the plurality of positive electrode binder particles 213 interposed therebetween.

In this case, the positive electrode coating film 212, for example, not only covers the entire surface of the positive electrode active material particle 211, but also covers the entire surface of the positive electrode binder particle 213. As a result, in a state in which each of the plurality of positive electrode active material particles 211 and the plurality of positive electrode binder particles 213 are covered with the positive electrode coating film 212, the plurality of positive electrode active material particles 211 are bound to each other with the plurality of positive electrode binder particles 213 interposed therebetween.

The reason why the positive electrode coating film 212 covers the entire surface of the positive electrode binder particle 213 is because the surface of the positive electrode binder particle 213 is not exposed, and thus the decomposition reaction of the electrolytic solution resulting from reactivity of the surface of the positive electrode binder particle 213 is also suppressed, and the transfer of electrons in the vicinity of the surface of the positive electrode 21 is further suppressed. As a result, the decomposition reaction of the electrolytic solution during charging and discharging is further suppressed, and the deterioration of the crystal structure of the positive electrode active material particle 211 is further suppressed, so that the battery characteristics are less likely to deteriorate.

It should be understood that details of the number of positive electrode binder particles 213 whose entire surface is covered with the positive electrode coating film 212 are, for example, similar to the details of the number of positive electrode active material particles 211 whose entire surface is covered with the positive electrode coating film 213. That is, the number of the positive electrode binder particles 212 whose entire surface is covered with the positive electrode coating film 212 may be all (the total number) of the plurality of positive electrode binder particles 213, or may be a part (a predetermined number smaller than the total number) of the plurality of positive electrode binder particles 213.

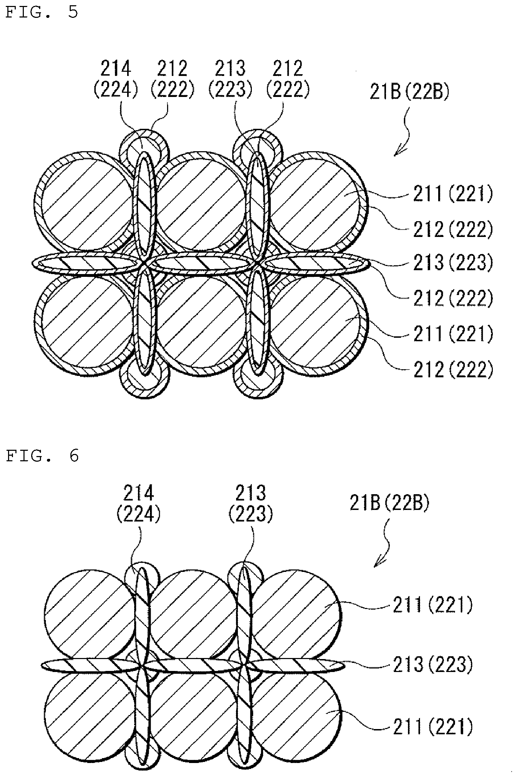

Further, for example, when the positive electrode active material layer 21B further contains a positive electrode binder and a positive electrode conductive agent, as shown in FIG. 5, for example, the positive electrode active material layer 21B includes a plurality of binder particles (positive electrode binder particles 213) and a plurality of conductive particles (positive electrode conductive particles 214), together with the plurality of positive electrode active material particles 211 and the positive electrode coating film 212. Details of the plurality of positive electrode binder particles 213 are as described above. The plurality of positive electrode conductive particles 214 are a plurality of particulate positive electrode conductive agents, and details of the positive electrode conductive agent are as described above. FIG. 5 shows a state in which the plurality of positive electrode active material particles 211 and the plurality of positive electrode conductive particles 214 are bound to each other with the plurality of positive electrode binder particles 213 interposed therebetween.

In this case, the positive electrode coating film 212, for example, not only covers the entire surface of the positive electrode active material particle 211, but also covers the entire surface of the positive electrode binder particle 213, and covers the entire surface of the positive electrode conductive particle 214. As a result, in the state in which each of the plurality of positive electrode active material particles 211, the plurality of positive electrode binder particles 213 and the plurality of positive electrode conductive particles 214 are covered with the positive electrode coating film 212, the plurality of positive electrode active material particles 211 and the plurality of positive electrodes conductive particles 214 are bound to each other with the plurality of positive electrode binder particles 213 interposed therebetween.

The reason why the positive electrode coating film 212 covers the entire surface of the positive electrode conductive particle 214 is because the surface of the positive electrode conductive particle 214 is not exposed, and thus the decomposition reaction of the electrolytic solution resulting from reactivity of the surface of the positive electrode conductive particle 214 is also suppressed, and the transfer of electrons in the vicinity of the surface of the positive electrode 21 is further suppressed. As a result, the decomposition reaction of the electrolytic solution during charging and discharging is further suppressed, and the deterioration of the crystal structure of the positive electrode active material particle 211 is further suppressed, so that the battery characteristics are less likely to deteriorate.

It should be understood that details of the number of the positive electrode conductive particles 214 whose entire surface is covered with the positive electrode coating film 212 are, for example, similar to the details of the number of the positive electrode active material particles 211 whose entire surface is covered with the positive electrode coating film 213. That is, the number of the positive electrode conductive particles 214 whose entire surface is covered with the positive electrode coating film 212 may be all (the total number) of the plurality of positive electrode conductive particles 214, or may be a part (a predetermined number smaller than the total number) of the plurality of positive electrode conductive particles 214.

### [Detailed Configuration of Negative Electrode]

Details of the configuration of the negative electrode 22 (negative electrode active material layer 22B) are, for example, similar to the details of the configuration of the positive electrode 21 (positive electrode active material layer 21B).

That is, as shown in FIG. 3, for example, the negative electrode active material layer 22B includes a plurality of active material particles (negative electrode active material particles 221) and a coating film (negative electrode coating film 222). The plurality of negative electrode active material particles 221 are a plurality of particulate negative electrode active materials, and details of the negative electrode active material are as described above. The negative electrode coating film 222 is provided on the surfaces of the plurality of negative electrode active material particles 221 and protects the surface of the negative electrode active material particle 221.

Details of the configuration of the plurality of negative electrode active material particles 221 are, for example, similar to the details of the configuration of the plurality of positive electrode active material particles 211. Further, details of the configuration of the negative electrode coating film 222 are, for example, similar to the details of the configuration of the positive electrode coating film 212. That is, details of a composition of the negative electrode coating film 222, a formation range of the negative electrode coating film 222, and the number of the negative electrode active material particles 221 whose entire surface is covered with the negative electrode coating film 222 are, for example, similar to the composition of the positive electrode coating film 212, the formation range of the positive electrode coating film 212, and the number of the positive electrode active material particles 211 whose entire surface is covered with the positive electrode coating film 212.

The reason why the negative electrode coating film 222 contains a pyrrole compound, the reason why the negative electrode coating film 222 covers the entire surface of the negative electrode active material particle 222 and the reason why the entire surface of the negative electrode active material particle 221 is covered with the negative electrode coating film 222 are similar to the reason why the positive electrode coating film 212 contains a pyrrole compound, the reason why the positive electrode coating film 212 covers the entire surface of the positive electrode active material particle 212 and the reason why the entire surface of the positive electrode active material particle 211 is covered with the positive electrode coating film 212.

It should be understood that details of the target for forming the negative electrode coating film 222 are, for example, similar to the details of the target for forming the positive electrode coating film 212.

Specifically, for example, when the negative electrode active material layer 22B further contains a negative electrode binder, as shown in FIG. 4, for example, the negative electrode active material layer 22B includes a plurality of binder particles (negative electrode binder particles 223), together with the plurality of negative electrode active material particles 221 and the negative electrode coating film 222, and the negative electrode coating film 222 not only covers the entire surface of the negative electrode active material particle 221, but also covers the entire surface of the negative electrode binder particle 223.

The plurality of negative electrode binder particles 223 are a plurality of particulate negative electrode binders, and details of the negative electrode binder are as described above. Details of the configuration of the negative electrode binder particle 223 are, for example, similar to the details of the configuration of the positive electrode binder particle 213. In FIG. 4, in the state in which each of the plurality of negative electrode active material particles 221 and the plurality of negative electrode binder particles 223 are covered with the negative electrode coating film 222, a state in which the plurality of negative electrode active material particles 221 are bound to each other with the plurality of negative electrode binder particles 223 interposed therebetween.

The reason why the negative electrode coating film 222 covers the entire surface of the negative electrode binder particle 223 is similar to the reason why the positive electrode coating film 212 covers the entire surface of the positive electrode binder particle 213. Details of the number of the negative electrode binder particles 223 whose entire surface is covered with the negative electrode coating film 222 are, for example, similar to the details of the number of the positive electrode binder particles 213 whose entire surface is covered with the positive electrode coating film 212.

Further, for example, when the negative electrode active material layer 22B further contains a negative electrode binder and a negative electrode conductive agent, as shown in FIG. 5, for example, the negative electrode active material layer 22B includes a plurality of binder particles (negative electrode binder particles 223) and a plurality of conductive particles (negative electrode conductive particles 224), together with the plurality of negative electrode active material particles 221 and the negative electrode coating film 222. The negative electrode coating film 222, for example, not only covers the entire surface of the negative electrode active material particle 221, but also the entire surface of the negative electrode binder particle 223, and covers the entire surface of the negative electrode conductive particle 224.

The plurality of negative electrode conductive particles 224 are a plurality of particulate negative electrode conductive agents, and details of the negative electrode conductive agent are as described above. Details of the configuration of the negative electrode conductive particle 224 are, for example, similar to the details of the configuration of the positive electrode conductive particle 214. In FIG. 5, in the state in which each of the plurality of negative electrode active material particles 221, the plurality of negative electrode binder particles 223 and the plurality of negative electrode conductive particles 224 are covered with the negative electrode coating film 222, a state in which the plurality of negative electrode active material particles 221 and the plurality of conductive particles 224 are bound to each other with the plurality of negative electrode binder particles 223 interposed therebetween.

The reason why the negative electrode coating film 222 covers the entire surface of the negative electrode conductive particle 224 is similar to the reason why the positive electrode coating film 212 covers the entire surface of the positive electrode conductive particle 214. Details of the number of the negative electrode conductive particles 224 whose entire surface is covered with the negative electrode coating film 222 are, for example, similar to the details of the number of the positive electrode conductive particles 214 whose entire surface is covered with the positive electrode coating film 212.

### <1-3. Operation>

The lithium ion secondary battery operates, for example, as follows.

During charging, lithium ions are released from the positive electrode 21, and the lithium ions are stored in the negative electrode 22 with the electrolytic solution interposed therebetween. On the other hand, during discharging, lithium ions are released from the negative electrode 22, and the lithium ions are stored in the positive electrode 21 with the electrolytic solution interposed therebetween.

### <1-4. Manufacturing Method>

The lithium ion secondary battery is manufactured, for example, by the following procedure.

### [Production of Positive Electrode]

First, a positive electrode active material and a pyrrole compound are mixed and then the mixture is stirred to obtain a positive electrode active material mixture. Subsequently, the positive electrode active material mixture is mixed with other materials such as a positive electrode binder and a positive electrode conductive agent, as necessary, to obtain a positive electrode mixture. Then, the positive electrode mixture is dispersed in an organic solvent or the like to obtain a paste-like positive electrode mixture slurry. Lastly, the positive electrode mixture slurry is applied on both sides of the positive electrode current collector 21A to form the positive electrode active material layer 21B. Thereafter, the positive electrode active material layer 21B may be compression-molded using a roll press machine or the like. In this case, the positive electrode active material layer 21B may be heated or compression molding may be repeated a plurality of times.

In the production process of the positive electrode 21, as described above, first, in order to obtain the positive electrode active material mixture, the positive electrode active material is mixed with the pyrrole compound in a state in which other materials such as the positive electrode binder and the positive electrode conductive agent do not coexist. As a result, as shown in FIG. 3, the positive electrode coating film 212 containing the pyrrole compound is formed so as to cover the entire surface of the positive electrode active material particle 211.

Thereafter, by adding the positive electrode binder and the positive electrode conductive agent to the positive electrode active material mixture, as shown in FIGS. 4 and 5, the entire surface of the positive electrode binder particle 213 is covered with the positive electrode coating film 212, and the entire surface of the positive electrode conductive particle 214 is covered with the positive electrode coating film 212.

### [Production of Negative Electrode]

The negative electrode active material layers 22B are formed on both sides of the negative electrode current collector 22A by a procedure similar to the production procedure of the positive electrode 21.

Specifically, a negative electrode active material and a pyrrole compound are mixed to form a negative electrode active material mixture, and then the negative electrode active material mixture and a negative positive electrode binder and a paste-like negative electrode mixture slurry in which a negative electrode conductive agent or the like is dispersed in an organic solvent, as necessary, are applied on both sides of the negative electrode current collector 22A to form the negative electrode active material layer 22B. Thereafter, the negative electrode active material layer 22B may be compression-molded using a roll press machine or the like.

In the production process of the negative electrode 22, the negative electrode coating film 222 is formed as in the case where the positive electrode coating film 212 is formed in the production process of the positive electrode 21.

Specifically, as described above, in order to obtain the negative electrode active material mixture, the negative electrode active material is mixed with the pyrrole compound in a state in which other materials such as the negative electrode binder and the negative positive electrode conductive agent do not coexist. As a result, as shown in FIG. 3, the negative electrode coating film 222 containing the pyrrole compound is formed so as to cover the entire surface of the negative electrode active material particle 211.

Thereafter, by adding the negative electrode binder and the negative electrode conductive agent to the negative electrode active material mixture, as shown in FIGS. 4 and 5, the entire surface of the negative electrode binder particle 223 is covered with the negative electrode coating film 222, and the entire surface of the negative electrode conductive particle 224 is covered with the negative electrode coating film 222.

### [Assembly of Lithium Ion Secondary Battery]

First, the positive electrode lead 25 is connected to the positive electrode current collector 21A using a welding method or the like, and the negative electrode lead 26 is connected to the negative electrode current collector 22A using a welding method or the like. Subsequently, the positive electrode 21 and the negative electrode 22 are stacked on each other with the separator 23 interposed therebetween, and then the positive electrode 21, the negative electrode 22 and the separator 23 are wound to form a wound body. Then, the center pin 24 is inserted into the space 20C provided at the winding center of the wound body.

Subsequently, the wound body is accommodated inside the battery can 11 while sandwiching the wound body with the pair of insulating plates 12 and 13. In this case, the positive electrode lead 25 is connected to the safety valve mechanism 15 using a welding method or the like, and the negative electrode lead 26 is connected to the battery can 11 using a welding method or the like. Then, the wound body is impregnated with the electrolytic solution by injecting the electrolytic solution into the battery can 11. As a result, the electrolytic solution is impregnated into each of the positive electrode 21, the negative electrode 22 and the separator 23, so that the wound electrode body 20 is formed.

Lastly, the open end of the battery can 11 is crimped with the gasket 17 interposed therebetween to attach the battery cover 14, the safety valve mechanism 15 and the heat sensitive resistance element 16 to the open end. As a result, the wound electrode body 20 is sealed inside the battery can 11, so that the lithium ion secondary battery is completed.

### <1-5. Action and Effect>

According to the cylindrical-type lithium ion secondary battery, in the positive electrode 21 (positive electrode active material layer 21B), the positive electrode coating film 212 covers the entire surface of the positive electrode active material particle 211, and the positive electrode coating film 212 contains the pyrrole compound. Further, in the negative electrode 22 (negative electrode active material layer 22B), the negative electrode coating film 222 covers the entire surface of the negative electrode active material particle 221, and the negative electrode coating film 222 contains the pyrrole compound. Accordingly, excellent battery characteristics can be obtained for a reason described below.

FIG. 6 shows a sectional configuration corresponding to FIG. 5 for explaining a configuration of a lithium ion secondary battery (positive electrode 21 and negative electrode 22) of Comparative Example 1. As shown in FIG. 6, for example, the lithium ion secondary battery of Comparative Example 1 has a configuration similar to the lithium ion secondary battery of the present technology, except that the positive electrode active material layer 21B does not include the positive electrode coating film 212, and the negative electrode active material layer 22B does not include the negative electrode coating film 222.

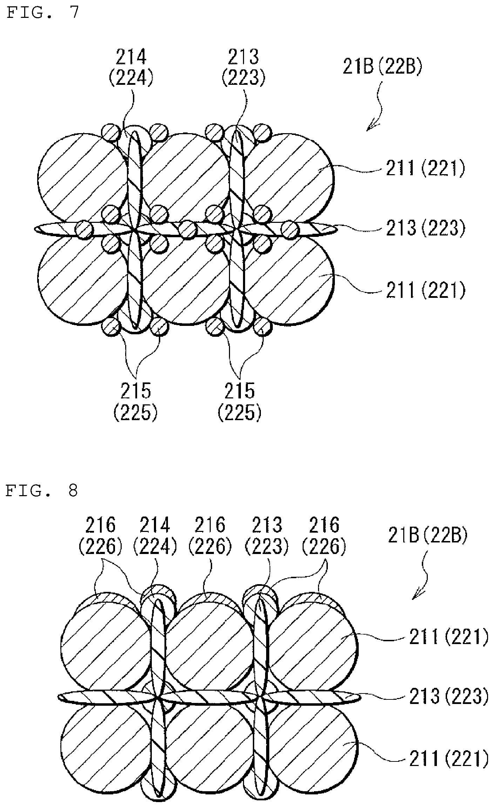

FIG. 7 shows a sectional configuration corresponding to FIG. 5 for explaining a configuration of a lithium ion secondary battery (positive electrode 21 and negative electrode 22) of Comparative Example 2. As shown in FIG. 7, for example, the lithium ion secondary battery of Comparative Example 2 has a configuration similar to the lithium ion secondary battery of the present technology, except that the positive electrode active material layer 21B includes a plurality of positive electrode coated particles 215 instead of the positive electrode coating film 212, and the negative electrode active material layer 22B includes a plurality of negative electrode coated particles 225 instead of the negative electrode coating film 222.

FIG. 8 shows a sectional configuration corresponding to FIG. 5 for explaining a configuration of a lithium ion secondary battery (positive electrode 21 and negative electrode 22) of Comparative Example 3. As shown in FIG. 8, for example, the lithium ion secondary battery of Comparative Example 3 has a configuration similar to the lithium ion secondary battery of the present technology, except that the positive electrode active material layer 21B includes a positive electrode coating film 216 instead of the positive electrode coating film 212, and the negative electrode active material layer 22B includes a negative electrode coating film 226 instead of the negative electrode coating film 222.

In the manufacturing process of the lithium ion secondary battery of Comparative Example 1, for example, the pyrrole compound is not used in the production process of the positive electrode 21 and the pyrrole compound is not used in the production process of the negative electrode 22. As a result, as shown in FIG. 6, the positive electrode coating film 212 containing the pyrrole compound is not formed, and the negative electrode coating film 222 containing the pyrrole compound is not formed.

In this case, the entire surface of the positive electrode active material particle 211 having high reactivity is exposed, so that the electrolytic solution is in contact with the surface of the positive electrode active material particle 211. Further, since the entire surface of the negative electrode active material particle 221 having high reactivity is exposed, so that the electrolytic solution is in contact with the surface of the negative electrode active material particle 221. As a result, the electrolytic solution is easily decomposed on the surface of the positive electrode active material particle 211, and the electrolytic solution is easily decomposed on the surface of the negative electrode active material particle 221. Accordingly, the decomposition reaction of the electrolytic solution is likely to occur during charging and discharging, and battery characteristics are likely to deteriorate.

In the manufacturing process of the lithium ion secondary battery of Comparative Example 2, for example, in the production process of the positive electrode 21 (the preparation process of the positive electrode mixture), the positive electrode active material and the pyrrole compound are mixed together with the positive electrode binder and the positive electrode conductive agent, and also, in the production process of the negative electrode 22 (the preparation process of the negative electrode mixture), the negative electrode active material and the pyrrole compound are mixed together with the negative electrode binder and the negative electrode conductive agent. That is, the positive electrode active material is mixed with the pyrrole compound in a state in which the positive electrode binder and the positive electrode conductive agent coexist, and the negative electrode active material is mixed with the pyrrole compound in a state in which the negative electrode binder and the negative electrode conductive agent coexist.

As a result, as shown in FIG. 7, due to the coexistence of the positive electrode binder and the positive electrode conductive agent, the pyrrole compound is less likely to be present in the vicinity of the surface of the positive electrode active material particle 211, and thus a plurality of positive electrode coated particles 215 containing the pyrrole compound are formed so as to partially cover the surface of the positive electrode active material particle 211. Further, due to the coexistence of the negative electrode binder and the negative electrode conductive agent, the pyrrole compound is less likely to be present in the vicinity of the surface of the negative electrode active material particle 221, and thus a plurality of negative electrode coated particles 225 containing the pyrrole compound are formed so as to partially cover the surface of the negative electrode active material particle 221.

The plurality of positive electrode coated particles 215, for example, not only partially cover the surface of the positive electrode active material particle 211, but also partially cover the surface of the positive electrode binder particle 213, and partially cover the surface of the positive electrode conductive particle 214. Moreover, the plurality of negative electrode coated particles 225, for example, not only partially cover the surface of the negative electrode active material particle 221, but also partially cover the surface of the negative electrode binder particle 223, and partially cover the surface of the negative electrode conductive particle 224.

In this case, most of the surface of the positive electrode active material particle 221 having high reactivity is still exposed, so that the electrolytic solution is easily decomposed on the surface of the positive electrode active material particle 221. Further, most of the surface of the negative electrode active material particle 221 having high reactivity is still exposed, so that the electrolytic solution is easily decomposed on the surface of the negative electrode active material particle 221. Accordingly, the decomposition reaction of the electrolytic solution is likely to occur during charging and discharging, and battery characteristics are likely to deteriorate.

In the manufacturing process of the lithium ion secondary battery of Comparative Example 3, for example, the pyrrole compound is not used in each of the production process of the positive electrode 21 and the production process of the negative electrode 22, and the pyrrole compound is used in the preparation process of the electrolytic solution. That is, the positive electrode active material layer 21B and the negative electrode active material layer 22B do not contain the pyrrole compound, and the electrolytic solution contains the pyrrole compound.

As a result, as shown in FIG. 8, on a side close to the separator 23 impregnated with the electrolytic solution, the positive electrode active material particle 211 is easily in contact with the electrolytic solution, and thus a positive electrode coating film 216 containing the pyrrole compound is formed so as to partially cover the surface of the positive electrode active material particle 211. Further, on the side close to the separator 23 impregnated with the electrolytic solution, the negative electrode active material particle 221 is easily in contact with the electrolytic solution, and thus a negative electrode coating film 226 containing the pyrrole compound is formed so as to partially cover the surface of the negative electrode active material particle 221.

The positive electrode coating film 216, for example, not only partially covers the surface of the positive electrode active material particle 211, but also partially covers the surface of the positive electrode binder particle 213, and partially covers the surface of the positive electrode conductive particle 214. Moreover, the negative electrode coating film 226, for example, not only partially covers the surface of the negative electrode active material particle 221, but also partially covers the surface of the negative electrode binder particle 223, and partially covers the surface of the negative electrode conductive particle 224.

In this case, similarly to the lithium ion secondary battery of Comparative Example 2, most of the surface of the positive electrode active material particle 211 having high reactivity is still exposed, so that the electrolytic solution is easily decomposed on the surface of the positive electrode active material particle 211. Further, most of the surface of the negative electrode active material particle 221 having high reactivity is still exposed, so that the electrolytic solution is easily decomposed on the surface of the negative electrode active material particle 221. Accordingly, the decomposition reaction of the electrolytic solution is likely to occur during charging and discharging, and battery characteristics are likely to deteriorate.

On the other hand, in the manufacturing process of the lithium ion secondary battery of the present technology, as described above, in the manufacturing process of the positive electrode 21 (the preparation process of the positive electrode mixture), only the positive electrode active material and the pyrrole compound are mixed in advance, and in the production process of the negative electrode 22 (the preparation process of the negative electrode mixture), only the negative electrode active material and the pyrrole compound are mixed in advance. That is, the positive electrode active material is mixed with the pyrrole compound in a state in which the positive electrode binder and the positive electrode conductive agent do not coexist, and the negative electrode active material is mixed with the pyrrole compound in a state in which the negative electrode binder and the negative electrode conductive agent do not coexist.

As a result, as shown in FIG. 5, the pyrrole compound is likely to be present in the vicinity of the surface of the positive electrode active material particle 211, and the abundance of the pyrrole compound is made uniform over the entire region of the surface of the positive electrode active material particle 211, and thus a positive electrode coating film 212 containing the pyrrole compound is formed so as to entirely cover the surface of the positive electrode active material particle 211. Further, the pyrrole compound is likely to be present in the vicinity of the surface of the negative electrode active material particle 221, and the abundance of the pyrrole compound is made uniform over the entire region of the surface of the negative electrode active material particle 221, and thus a negative electrode coating film 222 containing the pyrrole compound is formed so as to entirely cover the surface of the negative electrode active material particle 221.

The positive electrode coating film 212, for example, not only entirely covers the surface of the positive electrode active material particle 211, but also entirely covers the surface of the positive electrode binder particle 213, and entirely covers the surface of the positive electrode conductive particle 214. Moreover, the negative electrode coating film 222, for example, not only entirely covers the surface of the negative electrode active material particle 221, but also entirely covers the surface of the negative electrode binder particle 223, and entirely covers the surface of the negative electrode conductive particle 224.

In this case, since the surface of the positive electrode active material particle 211 having high reactivity is barely exposed, the electrolytic solution is less likely to be decomposed on the surface of the positive electrode active material particle 211. Moreover, since the surface of the negative electrode active material particle 221 having high reactivity is barely exposed, the electrolytic solution is less likely to be decomposed on the surface of the negative electrode active material particle 221. As a result, the decomposition reaction of the electrolytic solution is less likely to occur during charging and discharging, and thus battery characteristics are less likely to deteriorate. Accordingly, excellent battery characteristics can be obtained.

It should be understood that, here, the action and effect of the lithium ion secondary battery of the present technology have been described by taking as an example a case (FIG. 5) where the positive electrode active material layer 21B contains a positive electrode binder and a positive electrode conductive agent together with the positive electrode active material, and the negative electrode active material layer 22B contains a negative electrode binder and a negative electrode conductive agent together with the negative electrode active material.

However, the action and effect of the lithium ion secondary battery of the present technology described above are also obtained as well in a case (FIG. 4) where the positive electrode active material layer 21B contains only a positive electrode binder and the negative electrode active material layer 22B contains only a negative electrode binder. Further, the action and effect of the lithium ion secondary battery of the present technology described above are also obtained as well in a case (FIG. 3) where the positive electrode active material layer 21B does not contain a positive electrode binder and a positive electrode conductive agent, and the negative electrode active material layer 22B does not contain a negative electrode binder and a negative electrode conductive agent.

In particular, in the lithium ion secondary battery of the present technology, when the first pyrrole compound contains pyrrole, the second pyrrole compound contains diketopyrrolopyrrole, and the third pyrrole compound contains a compound in which each of R8 to R10 and R12 and R14 in Formula (3) is a hydrogen group and each of R11 and R15 is a tertiary butyl group, sufficiently strong and stable positive electrode coating film 212 and negative electrode coating film 222 are easily formed, so that a higher effect can be obtained. In this case, when each of the positive electrode coating film 212 and the negative electrode coating film 222 contains diketopyrrolopyrrole, remarkably strong and stable positive electrode coating film 212 and the negative electrode coating film 222 are formed, so that an even higher effect can be obtained.

Further, when the positive electrode active material layer 21B includes a plurality of positive electrode binder particles 213, and the positive electrode coating film 212 also covers the entire surface of the positive electrode binder particle 213, the decomposition reaction of the electrolytic solution resulting from reactivity of the surface of the positive electrode binder particle 213 is also suppressed, so that a higher effect can be obtained. Similarly, when the negative electrode active material layer 22B includes a plurality of negative electrode binder particles 223, and the negative electrode coating film 222 also covers the entire surface of the negative electrode binder particle 223, the decomposition reaction of the electrolytic solution resulting from reactivity of the surface of the negative electrode binder particle 223 is also suppressed, so that a higher effect can be obtained.

In this case, when the positive electrode active material layer 21B includes a plurality of positive electrode conductive particles 214, and the positive electrode coating film 212 also covers the entire surface of the positive electrode conductive particle 214, the decomposition reaction of the electrolytic solution resulting from reactivity of the surface of the positive electrode conductive particle 214 is also suppressed, so that an even higher effect can be obtained. Similarly, when the negative electrode active material layer 22B includes a plurality of negative electrode conductive particles 224, and the negative electrode coating film 222 also covers the entire surface of the negative electrode conductive particle 224, the decomposition reaction of the electrolytic solution resulting from reactivity of the surface of the negative electrode conductive particle 224 is also suppressed, so that an even higher effect can be obtained.

Further, when the negative electrode 22 contains a lithium titanium-containing composite oxide as a negative electrode active material, the lithium titanium-containing composite oxide is used in combination with the pyrrole compound, whereby the decomposition reaction of the electrolytic solution is further suppressed, so that a higher effect can be obtained.

Furthermore, when the positive electrode 21 contains a ternary composite oxide as a positive electrode active material, the ternary composite oxide is used in combination with the pyrrole compound, whereby the decomposition reaction of the electrolytic solution is further suppressed, so that a higher effect can be obtained.

### <2. Lithium Ion Secondary Battery (Laminated Film Type)>

Next, another lithium ion secondary battery of an embodiment of the present technology will be described. In the following description, constituent components (see FIGS. 1 and 2) of the cylindrical-type lithium ion secondary battery already described will be cited, as needed.

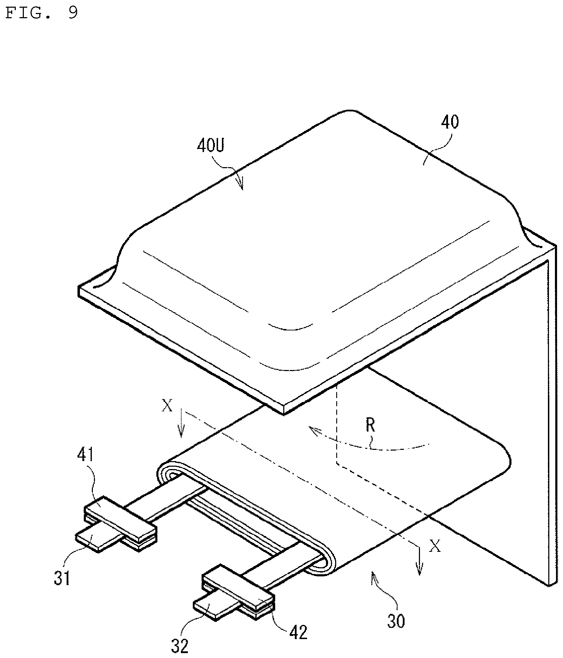

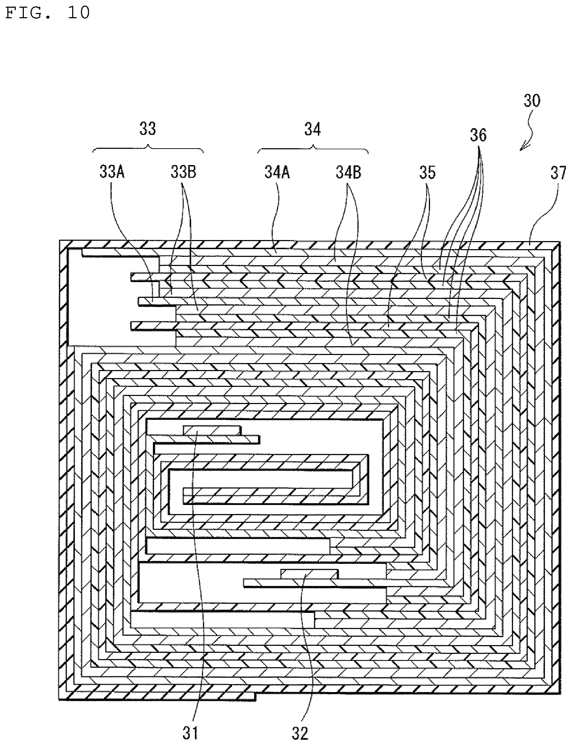

FIG. 9 illustrates a perspective configuration of another lithium ion secondary battery, and FIG. 10 illustrates a sectional configuration of a main part (wound electrode body 30) of the lithium ion secondary battery taken along line X-X shown in FIG. 9. It should be understood that FIG. 9 shows a state in which the wound electrode body 30 and an exterior member 40 are separated from each other.

### <2-1. Configuration>

As shown in FIG. 9, for example, the lithium ion secondary battery is a laminated film-type lithium ion secondary battery in which the wound electrode body 30 which is a battery device is accommodated inside the film-like exterior member 40 having softness (or flexibility).

The wound electrode body 30 is, for example, a wound body formed by winding a positive electrode 33 and a negative electrode 34 that are stacked on each other with a separator 35 and an electrolyte layer 36 interposed therebetween, and is protected by a protective tape 37. The electrolyte layer 36 is, for example, interposed between the positive electrode 33 and the separator 35, and is interposed between the negative electrode 34 and the separator 35. A positive electrode lead 31 is connected to the positive electrode 33, and a negative electrode lead 32 is connected to the negative electrode 34.

The positive electrode lead 31 is, for example, led out from the inside to the outside of the exterior member 40. The positive electrode lead 31 contains, for example, any one or two or more types of conductive materials such as aluminum, and the shape of the positive electrode lead 31 is, for example, one of a thin plate shape, a mesh shape, and the like.

The negative electrode lead 32 is led out in a similar direction to the positive electrode lead 31, for example, from the inside to the outside of the exterior member 40. The negative electrode lead 32 contains, for example, any one or two or more types of conductive materials such as copper, nickel and stainless, and the shape of the negative electrode lead 32 is a similar to, for example, the shape of the positive electrode lead 31.

The exterior member 40 is, for example, a single film that is foldable in a direction of an arrow R shown in FIG. 9. For example, a depression 40U for accommodating the wound electrode body 30 is provided in a portion of the exterior member 40.

The exterior member 40 is, for example, a laminate (laminated film) in which a fusion layer, a metal layer and a surface protective layer are stacked in this order. In the manufacturing process of the lithium ion secondary battery, for example, after the exterior member 40 is folded so that the fusion layers are opposed to each other with the wound electrode body 30 interposed therebetween, the outer peripheral edges of those fusion layers are fused to each other. The fusion layer is, for example, a film containing any one or two or more types of polymer compounds such as polypropylene. The metal layer is, for example, a metal foil containing any one or two or more types of aluminum and the like. The surface protective layer is, for example, a film containing any one or two or more types of polymer compounds such as nylon. It should be understood that the exterior member 40 includes, for example, two laminated films, and the two laminated films may be bonded to each other, for example, with an adhesive or the like interposed therebetween.

Between the exterior member 40 and the positive electrode lead 31, for example, an adhesion film 41 is inserted to prevent entering of outside air, and between the exterior member 40 and the negative electrode lead 32, for example, an adhesion film 42 having a function similar to the adhesion film 41 is inserted. Each of the adhesion films 41 and 42 includes a material having adhesion to each of the positive electrode lead 31 and the negative electrode lead 32, and the material contains, for example, any one or two or more types of polyolefin resins and the like. The polyolefin resin is, for example, polyethylene, polypropylene, modified polyethylene, modified polypropylene, or the like.

### [Positive Electrode, Negative Electrode and Separator]

The positive electrode 33 includes, for example, a positive electrode current collector 33A and a positive electrode active material layer 33B, and the negative electrode 34 includes, for example, a negative electrode current collector 34A and a negative electrode active material layer 34B. Each configuration of the positive electrode current collector 33A, the positive electrode active material layer 33B, the negative electrode current collector 34A and the negative electrode active material layer 34B is, for example, similar to each configuration of the positive electrode current collector 21A, the positive electrode active material layer 21B, the negative electrode current collector 22A and the negative electrode active material layer 22B. In addition, configuration of the separator 35 is, for example, similar to the configuration of the separator 23.

### [Electrolyte Layer]

The electrolyte layer 36 contains a polymer compound together with an electrolytic solution, and the electrolytic solution has a configuration similar to the electrolytic solution used in the cylindrical-type lithium ion secondary battery.

Since the electrolyte layer 36 described here is a so-called gel-like electrolyte, the electrolytic solution is held by the polymer compound in the electrolyte layer 36. This is because a high ionic conductivity (for example, 1 mS/cm or more at room temperature) is obtained, and leakage of the electrolytic solution is prevented. It should be understood that the electrolyte layer 36 may further contain any one or two or more types of other materials such as various additives.

The polymer compound contains, for example, one or both of a homopolymer and a copolymer. The homopolymer is, for example, polyacrylonitrile, polyvinylidene fluoride, polytetrafluoroethylene, polyhexafluoropropylene, or the like. The copolymer is, for example, a copolymer of vinylidene fluoride and hexafluoropyrene, or the like.

In the electrolyte layer 36, which is a gel-like electrolyte, a "solvent" contained in the electrolytic solution is a broad concept including not only liquid materials but also materials having ion conductivity capable of dissociating an electrolyte salt. Accordingly, when a polymer compound having ion conductivity is used, the polymer compound is also included in the solvent.

It should be understood that the electrolytic solution may be used as it is instead of the electrolyte layer 36. In this case, the electrolytic solution is impregnated into the wound electrode body 30 (the positive electrode 33, the negative electrode 34 and the separator 35).

### <2-2. Operation>

The lithium ion secondary battery operates, for example, as follows. During charging, lithium ions are released from the positive electrode 33, and the lithium ions are stored in the negative electrode 34 with the electrolyte layer 36 interposed therebetween. On the other hand, during discharging, lithium ions are released from the negative electrode 34, and the lithium ions are stored in the positive electrode 33 with the electrolyte layer 36 interposed therebetween.

### <2-3. Manufacturing Method>

The lithium ion secondary battery provided with the electrolyte layer 36 is manufactured, for example, by the following three types of procedures.

### [First Procedure]

First, the positive electrode 33 is produced by a procedure similar to the production procedure of the positive electrode 21, and the negative electrode 34 is produced by a procedure similar to the production procedure of the negative electrode 22. That is, in a case of producing the positive electrode 33, the positive electrode active material layers 33B are formed on both sides of the positive electrode current collector 33A, and in a case of producing the negative electrode 34, the negative electrode active material layers 34B are formed on both sides of the negative electrode current collector 34A.

Subsequently, a precursor solution is prepared by mixing the electrolytic solution, the polymer compound, the organic solvent, and the like. Then, the precursor solution is applied to the positive electrode 33 to form the electrolyte layer 36, and the precursor solution is applied to the negative electrode 34 to form the electrolyte layer 36. Next, the positive electrode lead 31 is connected to the positive electrode current collector 33A using a welding method or the like, and the negative electrode lead 32 is connected to the negative electrode current collector 34A using a welding method or the like. Subsequently, the positive electrode 33 and the negative electrode 34 are stacked on each other with the separator 35 interposed therebetween, and then the positive electrode 33, the negative electrode 34 and the separator 35 are wound to form the wound electrode body 30. Then, the protective tape 37 is attached to the surface of the wound electrode body 30.

Lastly, the exterior member 40 is folded so as to sandwich the wound electrode body 30, then the outer peripheral edges of the exterior member 40 are adhered to each other by using a thermal fusion method or the like. In this case, the adhesion film 41 is inserted between the positive electrode lead 31 and the exterior member 40, and the adhesion film 42 is inserted between the negative electrode lead 32 and the exterior member 40. As a result, the wound electrode body 30 is sealed inside the exterior member 40, so that the lithium ion secondary battery is completed.

### [Second Procedure]

First, the positive electrode 33 and the negative electrode 34 are produced, then the positive electrode lead 31 is connected to the positive electrode 33, and the negative electrode lead 32 is connected to the negative electrode 34. Subsequently, the positive electrode 33 and the negative electrode 34 are stacked on each other with the separator 35 interposed therebetween, and then the positive electrode 33, the negative electrode 34 and the separator 35 are wound to form a wound body, and the protective tape 37 is attached to the wound body. Then, after the exterior member 40 is folded so as to sandwich the wound body, remaining outer peripheral edges excluding the outer peripheral edge on one side of the exterior member 40 are bonded to each other by using a thermal fusion method or the like to accommodate the wound body inside a bag-shaped exterior member 40.

Subsequently, a composition for electrolyte is prepared by mixing the electrolytic solution, a monomer as a raw material for a polymer compound, a polymerization initiator, and as necessary, other materials such as a polymerization inhibitor. Then, after the composition for electrolyte is injected into the bag-shaped exterior member 40, the exterior member 40 is sealed by using a thermal fusion method or the like. Lastly, the monomer is thermally polymerized to form a polymer compound. As a result, the electrolytic solution is held by the polymer compound, so that the electrolyte layer 36 is formed. Accordingly, the wound electrode body 30 is sealed inside the exterior member 40, so that the lithium ion secondary battery is completed.

### [Third Procedure]

First, a wound body is produced and then accommodated inside a bag-shaped exterior member 40 by a procedure similar to the second procedure described above, except that the separator 35 in which the polymer compound layer is formed in the substrate layer is used. Subsequently, an electrolytic solution is injected into the exterior member 40, and then a cavity of the exterior member 40 is sealed by using a thermal fusion method or the like. Lastly, by heating the exterior member 40 while applying a load to the exterior member 40, the substrate layer is brought into close contact with each of the positive electrode 33 and the negative electrode 34 with the polymer compound layer interposed therebetween. As a result, the polymer compound layer is gelated by being impregnated with the electrolytic solution, so that the electrolyte layer 36 is formed. Accordingly, the wound electrode body 30 is sealed inside the exterior member 40, so that the lithium ion secondary battery is completed.

In the third procedure, the lithium ion secondary battery is less likely to swell as compared with the first procedure. Further, in the third procedure, as compared with the second procedure, the solvent and the monomer (the raw material for the polymer compound) are less likely to remain in the electrolyte layer 36, so that the formation process of the polymer compound is well controlled. Therefore, each of the positive electrode 33, the negative electrode 34 and the separator 35 is sufficiently brought into close contact with the electrolyte layer 36.

### <2-4. Action and Effect>

According to the laminated film-type lithium ion secondary battery, the positive electrode 33 (positive electrode active material layer 33B) has a configuration similar to the positive electrode 21 (positive electrode active material layer 21B), and the negative electrode 34 (negative electrode active material layer 34B) has a configuration similar to the negative electrode 22 (negative electrode active material layer 22B). Accordingly, for a reason similar to that of the case described for the cylindrical-type lithium ion secondary battery, the decomposition reaction of the electrolytic solution is suppressed during charging and discharging, so that excellent battery characteristics can be obtained.

It should be understood that other actions and effects of the laminated film-type lithium ion secondary battery are similar to the other actions and effects of the cylindrical-type lithium ion secondary battery.

### <3. Modified Example>

The configuration of the lithium ion secondary battery of the present technology can be appropriately changed.

Specifically, in FIGS. 3 to 5, the positive electrode active material layer 21B includes the positive electrode coating film 212, and the negative electrode active material layer 22B includes the negative electrode coating film 222. However, for example, while the positive electrode active material layer 21B includes the positive electrode coating film 212, the negative electrode active material layer 22B may not include the negative electrode coating film 222. Alternatively, for example, while the positive electrode active material layer 21B does not include the positive electrode coating film 212, the negative electrode active material layer 22B may include the negative electrode coating film 222.

In the former case, for example, while the entire surface of the positive electrode active material particle 211 is covered with the positive electrode coating film 212, the surface of the negative electrode active material particle 221 is not covered with the negative electrode coating film 222, so that the surface of the active material particle 221 is exposed. In the latter case, for example, while the surface of the positive electrode active material particle 211 is not covered with the positive electrode coating film 212 and thus the surface of the positive electrode active material particle 211 is exposed, the entire surface of the negative electrode active material particle 221 is covered with the negative electrode coating film 222.

Also in these cases, the decomposition reaction of the electrolytic solution is suppressed as compared with the case where the surface of the positive electrode active material particle 211 is entirely exposed and the surface of the negative electrode active material particle 221 is also entirely exposed. Further, the decomposition reaction of the electrolytic solution is suppressed as compared with the case where one surface of the positive electrode active material particle 211 and the negative electrode active material particle 221 is entirely exposed and the other surface is partially exposed. Accordingly, the effect similar to the cases shown in FIGS. 3 to 5 can be obtained.

It should be understood that in order to suppress the decomposition reaction of the electrolytic solution as much as possible, as shown in FIGS. 3 to 5, the positive electrode active material layer 21B preferably includes the positive electrode coating film 212, and the negative electrode active material layer 22B preferably includes the negative electrode coating film 222.

### <4. Application of Lithium Ion Secondary Battery>

Next, application of the lithium ion secondary battery will be described.

The application of the lithium ion secondary battery is not particularly limited as long as it is a machine, a device, a tool, an apparatus, a system (an assembly of a plurality of devices and the like) or the like that can use the lithium ion secondary battery as a power source for driving, a power storage source for power storage or the like. The lithium ion secondary battery used as the power source may be a main power source or an auxiliary power source. The main power source is a power source which is preferentially used regardless of the presence or absence of other power sources. The auxiliary power source may be, for example, a power source used instead of the main power source, or may be a power source switched from the main power source as necessary. When the lithium ion secondary battery is used as the auxiliary power source, the type of main power source is not limited to the lithium ion secondary battery.

The application of the lithium ion secondary battery is, for example, as follows. It is an electronic apparatus (including a portable electronic apparatus) such as a video camera, a digital still camera, a mobile phone, a laptop personal computer, a cordless phone, a headphone stereo, a portable radio, a portable television, or a portable information terminal. It is a portable household appliance such as an electric shaver. It is a storage apparatus such as a backup power source or a memory card. It is an electric tool such as an electric drill or an electric saw. It is a battery pack to be mounted on a laptop personal computer and the like as a detachable power source. It is a medical electronic apparatus such as a pacemaker or a hearing aid. It is an electric vehicle such as an electric automobile (including a hybrid automobile). It is an electric power storage system such as a household battery system that stores electric power in preparation for an emergency. It is needless to say that the application of the lithium ion secondary battery may be another application other than the applications described above.

### EXAMPLES

Examples of the present technology will be described below. It should be understood that the order of description is as follows.
1. Fabrication of Lithium Ion Secondary Battery
2. Evaluation of Lithium Ion Secondary Battery
3. Discussion
4. Summary

As described below, after a lithium ion secondary battery is fabricated, a battery characteristics of the lithium ion secondary battery was evaluated.

### <1. Fabrication of Lithium Ion Secondary Battery>

The laminated film-type lithium ion secondary battery shown in FIGS. 9 and 10 was fabricated by the following procedure.

### (Experimental Examples 1 to 27)

In a case of producing the positive electrode 33, first, a positive electrode active material mixture was obtained by mixing 89.5 parts by mass of a positive electrode active material and 1.0 part by mass of a pyrrole compound.

As the positive electrode active materials, five types of positive electrode active materials were used. They are LiNi_{0.6}Co_{0.2}Mn_{0.2}O₂ (NCM) and LiNi_{0.8}Co_{0.15}Al_{0.05}O₂ (NCA) which are lithium-containing composite oxides having a crystal structure of layered rock salt type, LiNi_{0.5}Mn_{1.5}O₄ (LNMO) which is a lithium-containing composite oxide having a crystal structure of spinel rock salt type, and LiMn_{0.75}Fe_{0.25}PO₄ (LMFP) and LiFePO₄ (LFP) which are lithium-containing phosphate compounds having a crystal structure of olivine type.

As the pyrrole compound, three types of pyrrole compounds (first pyrrole compound, second pyrrole compound and third pyrrole compound) were used. As the first pyrrole compound, pyrrole was used. As the second pyrrole compound, diketopyrrolopyrrole (DPP) was used. As the third pyrrole compound, a compound (DPPB) in which each of R8 to R10 and R12 to R14 in Formula (3) is a hydrogen group and each of R11 and R15 is a tertiary butyl group was used.

Subsequently, 90.5 parts by mass of the positive electrode active material mixture, 5.0 parts by mass of a positive electrode binder (polyvinylidene fluoride), and 4.5 parts by mass of a positive electrode conductive agent (graphite) were mixed to produce a positive electrode mixture. Then, the positive electrode mixture was put into an organic solvent (N-methyl-2-pyrrolidone), and then the organic solvent was stirred to prepare a paste-like positive electrode mixture slurry. Next, the positive electrode mixture slurry was applied on both sides of the positive electrode current collector 33A (strip-shaped aluminum foil, thickness = 12 µm) using a coating apparatus, and then the positive electrode mixture slurry was dried to form the positive electrode active material layer 33B. Lastly, the positive electrode active material layer 33B was compression-molded using a roll press machine.

It should be understood that, in the case of producing the positive electrode 33, as necessary, a positive electrode mixture slurry was prepared by a similar procedure except that the pyrrole compound was not used, and then the positive electrode active material layer 33B was formed using the positive electrode mixture slurry.

In a case of producing the negative electrode 34, first, 89.5 parts by mass of a negative electrode active material and 1.0 part by mass of the pyrrole compound were mixed to obtain a negative electrode active material mixture.

As the negative electrode active materials, graphite which is a carbon material and Li₄Ti₅O₁₂ (LTO) which is a lithium-containing compound (lithium titanium-containing composite oxide) were used. The type of pyrrole compound was made similar to one in the case of producing the positive electrode 33.

Subsequently, 90.5 parts by mass of the negative electrode active material mixture, 5.0 parts by mass of a negative electrode binder (polyvinylidene fluoride), and 4.5 parts by mass of a negative electrode conductive agent (graphite) were mixed to produce a negative electrode mixture. Then, the negative electrode mixture was put into an organic solvent (N-methyl-2-pyrrolidone), and then the organic solvent was stirred to prepare a paste-like negative electrode mixture slurry. Next, the negative electrode mixture slurry was applied on both sides of the negative electrode current collector 34A (strip-shaped copper foil, thickness = 15 µm) using a coating apparatus, and then the negative electrode mixture slurry was dried to form the negative electrode active material layer 34B. Lastly, the negative electrode active material layer 34B was compression-molded using a roll press machine.

It should be understood that, in the case of producing the negative electrode 34, as necessary, a negative electrode mixture slurry was prepared by a similar procedure except that the pyrrole compound was not used, and then the negative electrode active material layer 34B was formed using the negative electrode mixture slurry.

In a case of preparing an electrolytic solution, an electrolyte salt (lithium hexafluorophosphate (LiPF₆)) was added to solvents (ethylene carbonate and dimethyl carbonate), and then the solvents were stirred. In this case, a mixing ratio (volume ratio) of the solvents was set to ethylene carbonate : dimethyl carbonate = 30 : 70, and a content of the electrolyte salt was set to 1 mol/kg with respect to the solvent.

In a case of assembling the lithium ion secondary battery, first, the positive electrode lead 31 made of aluminum was welded to the positive electrode current collector 33A, and the negative electrode lead 32 made of copper was welded to the negative electrode current collector 34A. Subsequently, the positive electrode 33 and the negative electrode 34 were stacked on each other with the separator 35 (microporous polyethylene film, thickness = 15 µm) interposed therebetween to obtain a laminate. Next, the laminate was wound in the longitudinal direction and then the protective tape 37 was attached to the laminate to form a wound body.

Subsequently, the exterior member 40 was folded so as to sandwich the wound body, and then the outer peripheral edges of the two sides of the exterior member 40 were thermally fused to each other. As the exterior member 40, an aluminum laminated film in which a surface protective layer (nylon film, thickness = 25 µm), a metal layer (aluminum foil, thickness = 40 µm), and a fusion layer (polypropylene film, thickness = 30 µm) were stacked in this order was used. In this case, an adhesion film 41 (polypropylene film) was inserted between the positive electrode lead 31 and the exterior member 40, and an adhesion film 42 (polypropylene film) was inserted between the negative electrode lead 32 and the exterior member 40.

Lastly, by injecting the electrolytic solution into the exterior member 40 to impregnate the wound body with the electrolytic solution, and then the outer peripheral edges of the remaining one side of the exterior member 40 was thermally fused in a reduced pressure environment. As a result, the wound electrode body 30 was formed and the wound electrode body 30 was sealed inside the exterior member 40, so that a laminated film-type lithium ion secondary battery was completed.

### (Experimental Examples 28 to 33)

A lithium ion secondary battery was produced by a similar procedure except that the pyrrole compound was not used in each of the production process of the positive electrode 33 and the production process of the negative electrode 34. In this case, in the production process of the positive electrode 33, 90.5 parts by mass of a positive electrode active material, 5.0 parts by mass of a positive electrode binder (polyvinylidene fluoride), and 4.5 parts by mass of a positive electrode conductive agent (graphite) were mixed together to obtain a positive electrode mixture. Further, 90.5 parts by mass of a negative electrode active material, 5.0 parts by mass of a negative electrode binder (polyvinylidene fluoride), and 4.5 parts by mass of a negative electrode conductive agent (graphite) were mixed together to obtain a negative electrode mixture.

### (Experimental Examples 34 to 60)

A lithium ion secondary battery was produced by a similar procedure except that the production procedure of the positive electrode 33 and the production procedure of the negative electrode 34 were respectively changed.

In a case of producing the positive electrode 33, 89.5 parts by mass of a positive electrode active material, 1.0 part by mass of a pyrrole compound, 5.0 parts by mass of a positive electrode binder (polyvinylidene fluoride), and 4.5 parts by mass of a positive electrode conductive agent (graphite) were mixed together to obtain a positive electrode mixture.

In a case of producing the negative electrode 34, 89.5 parts by mass of a negative electrode active material, 1.0 part by mass of a pyrrole compound, 5.0 parts by mass of a negative electrode binder (polyvinylidene fluoride), and 4.5 parts by mass of a negative electrode conductive agent (graphite) were mixed together to obtain a negative electrode mixture.

### (Experimental Examples 61 to 87)

A lithium ion secondary battery was produced by a similar procedure except that the production procedure of the positive electrode 33, the production procedure of the negative electrode 34, and the preparation procedure of the electrolytic solution were respectively changed.

In a case of producing the positive electrode 33, the pyrrole compound was not used, and in a case of producing the negative electrode 34, the pyrrole compound was not used. In a case of preparing an electrolytic solution, a similar procedure was performed except that an electrolyte salt was added to a solvent and then the pyrrole compound was further added to the solvent. In this case, a content of the pyrrole compound in the electrolytic solution was set to 1.0% by weight.

### <2. Evaluation of Lithium Ion Secondary Battery>

When a battery characteristic of the lithium ion secondary batteries was evaluated by the following procedure, the results shown in Tables 1 to 4 were obtained. Here, an electric resistance characteristic was examined as the battery characteristic.

In a case of examining the electrical resistance characteristic, after repeatedly charging and discharging (300 cycles) the lithium ion secondary battery in a normal temperature environment (temperature = 23°C), electrical resistance (impedance after charging and discharging (Ω)) of the lithium ion secondary battery was measured.

At charging, constant current charge was performed at a current of 1 C until a voltage reached 4.2 V, and then constant voltage charge was performed at a voltage of 4.2 V until a current reached 1/30 C. At discharging, constant current discharge was performed at a current of 1 C until the voltage reached 2.5 V. "1 C" refers to a current value at which a battery capacity (theoretical capacity) is completely discharged in 1 hour, and "1/30 C" refers to a current value at which the battery capacity described above is completely discharged in 30 hours.

**[Table 1]**

| Experimental Example | Positive electrode | | | Negative electrode | | | Electrolytic solution | Impedance after charging and discharging (Ω) |
|---|---|---|---|---|---|---|---|---|
| | Positive electrode active material | Pyrrole compound | Coating form | Negative electrode active material | Pyrrole compound | Coating form | Pyrrole compound | |
| 1 | NCM | Pyrrole | Entirety | LTO | - | - | - | 65.5 |
| 2 | NCA | Pyrrole | Entirety | LTO | - | - | - | 67.0 |
| 3 | LNMO | Pyrrole | Entirety | LTO | - | - | - | 105.0 |
| 4 | LMFP | Pyrrole | Entirety | LTO | - | - | - | 132.0 |
| 5 | LFP | Pyrrole | Entirety | LTO | - | - | - | 65.0 |
| 6 | NCM | Pyrrole | Entirety | Graphite | - | - | - | 109.5 |
| 7 | NCM | - | - | LTO | Pyrrole | Entirety | - | 69.5 |
| 8 | NCM | - | - | Graphite | Pyrrole | Entirety | - | 114.0 |
| 9 | NCM | Pyrrole | Entirety | LTO | Pyrrole | Entirety | - | 63.3 |
| 10 | NCM | DPP | Entirety | LTO | - | - | - | 60.0 |
| 11 | NCA | DPP | Entirety | LTO | - | - | - | 60.5 |
| 12 | LNMO | DPP | Entirety | LTO | - | - | - | 99.5 |
| 13 | LMFP | DPP | Entirety | LTO | - | - | - | 127.0 |
| 14 | LFP | DPP | Entirety | LTO | - | - | - | 59.5 |
| 15 | NCM | DPP | Entirety | Graphite | - | - | - | 104.0 |
| 16 | NCM | - | - | LTO | DPP | Entirety | - | 63.5 |
| 17 | NCM | - | - | Graphite | DPP | Entirety | - | 107.0 |
| 18 | NCM | DPP | Entirety | LTO | DPP | Entirety | - | 57.0 |
| 19 | NCM | DPPB | Entirety | LTO | - | - | - | 67.0 |
| 20 | NCA | DPPB | Entirety | LTO | - | - | - | 68.5 |
| 21 | LNMO | DPPB | Entirety | LTO | - | - | - | 112.0 |
| 22 | LMFP | DPPB | Entirety | LTO | - | - | - | 134.5 |
| 23 | LFP | DPPB | Entirety | LTO | - | - | - | 68.5 |
| 24 | NCM | DPPB | Entirety | Graphite | - | - | - | 110.0 |
| 25 | NCM | - | - | LTO | DPPB | Entirety | - | 73.5 |
| 26 | NCM | - | - | Graphite | DPPB | Entirety | - | 117.0 |
| 27 | NCM | DPPB | Entirety | LTO | DPPB | Entirety | - | 65.8 |

**[Table 2]**

| Experimental Example | Positive electrode | | | Negative electrode | | | Electrolytic solution | Impedance after charging and discharging (Ω) |
|---|---|---|---|---|---|---|---|---|
| | Positive electrode active material | Pyrrole compound | Coating form | Negative electrode active material | Pyrrole compound | Coating form | Pyrrole compound | |
| 28 | NCM | - | - | LTO | - | - | - | 110.0 |
| 29 | NCA | - | - | LTO | - | - | - | 105.0 |
| 30 | LNMO | - | - | LTO | - | - | - | 175.0 |
| 31 | LMFP | - | - | LTO | - | - | - | 220.0 |
| 32 | LFP | - | - | LTO | - | - | - | 85.0 |
| 33 | NCM | - | - | Graphite | - | - | - | 135.0 |
| 34 | NCM | Pyrrole | Part 1 | LTO | - | - | - | 97.5 |
| 35 | NCA | Pyrrole | Part 1 | LTO | - | - | - | 101.0 |
| 36 | LNMO | Pyrrole | Part 1 | LTO | - | - | - | 158.0 |
| 37 | LMFP | Pyrrole | Part 1 | LTO | - | - | - | 185.0 |
| 38 | LFP | Pyrrole | Part 1 | LTO | - | - | - | 74.5 |
| 39 | NCM | Pyrrole | Part 1 | Graphite | - | - | - | 127.0 |
| 40 | NCM | - | - | LTO | Pyrrole | Part 1 | - | 88.0 |
| 41 | NCM | - | - | Graphite | Pyrrole | Part 1 | - | 128.0 |
| 42 | NCM | Pyrrole | Part 1 | LTO | Pyrrole | Part 1 | - | 87.3 |
| 43 | NCM | DPP | Part 1 | LTO | - | - | - | 95.4 |
| 44 | NCA | DPP | Part 1 | LTO | - | - | - | 97.4 |
| 45 | LNMO | DPP | Part 1 | LTO | - | - | - | 154.7 |
| 46 | LMFP | DPP | Part 1 | LTO | - | - | - | 182.1 |
| 47 | LFP | DPP | Part 1 | LTO | - | - | - | 72.5 |
| 48 | NCM | DPP | Part 1 | Graphite | - | - | - | 123.4 |
| 49 | NCM | - | - | LTO | DPP | Part 1 | - | 86.6 |
| 50 | NCM | - | - | Graphite | DPP | Part 1 | - | 125.8 |
| 51 | NCM | DPP | Part 1 | LTO | DPP | Part 1 | - | 85.9 |

**[Table 3]**

| Experimental Example | Positive electrode | | | Negative electrode | | | Electrolytic solution | Impedance after charging and discharging (Ω) |
|---|---|---|---|---|---|---|---|---|
| | Positive electrode active material | Pyrrole compound | Coating form | Negative electrode active material | Pyrrole compound | Coating form | Pyrrole compound | |
| 52 | NCM | DPPB | Part 1 | LTO | - | - | - | 98.5 |
| 53 | NCA | DPPB | Part 1 | LTO | - | - | - | 99.5 |
| 54 | LNMO | DPPB | Part 1 | LTO | - | - | - | 157.0 |
| 55 | LMFP | DPPB | Part 1 | LTO | - | - | - | 187.5 |
| 56 | LFP | DPPB | Part 1 | LTO | - | - | - | 76.5 |
| 57 | NCM | DPPB | Part 1 | Graphite | - | - | - | 128.0 |
| 58 | NCM | - | - | LTO | DPPB | Part 1 | - | 91.5 |
| 59 | NCM | - | - | Graphite | DPPB | Part 1 | - | 131.0 |
| 60 | NCM | DPPB | Part 1 | LTO | DPPB | Part 1 | - | 90.5 |
| 61 | NCM | - | Part 2 | LTO | - | - | Pyrrole | 100.0 |
| 62 | NCA | - | Part 2 | LTO | - | - | Pyrrole | 102.5 |
| 63 | LNMO | - | Part 2 | LTO | - | - | Pyrrole | 166.0 |
| 64 | LMFP | - | Part 2 | LTO | - | - | Pyrrole | 199.0 |
| 65 | LFP | - | Part 2 | LTO | - | - | Pyrrole | 79. 0 |
| 66 | NCM | - | Part 2 | Graphite | - | - | Pyrrole | 131.0 |
| 67 | NCM | - | - | LTO | - | Part 2 | Pyrrole | 99.0 |
| 68 | NCM | - | - | Graphite | - | Part 2 | Pyrrole | 132.5 |
| 69 | NCM | - | Part 2 | LTO | - | Part 2 | Pyrrole | 90.2 |

**[Table 4]**

| Experimental Example | Positive electrode | | | Negative electrode | | | Electrolytic solution | Impedance after charging and discharging (Ω) |
|---|---|---|---|---|---|---|---|---|
| | Positive electrode active material | Pyrrole compound | Coating form | Negative electrode active material | Pyrrole compound | Coating form | Pyrrole compound | |
| 70 | NCM | - | Part 2 | LTO | - | - | DPP | 97.3 |
| 71 | NCA | - | Part 2 | LTO | - | - | DPP | 99.1 |
| 72 | LNMO | - | Part 2 | LTO | - | - | DPP | 155.6 |
| 73 | LMFP | - | Part 2 | LTO | - | - | DPP | 184.3 |
| 74 | LFP | - | Part 2 | LTO | - | - | DPP | 73.7 |
| 75 | NCM | - | Part 2 | Graphite | - | - | DPP | 126.3 |
| 76 | NCM | - | - | LTO | - | Part 2 | DPP | 88.9 |
| 77 | NCM | - | - | Graphite | - | Part 2 | DPP | 126.1 |
| 78 | NCM | - | Part 2 | LTO | - | Part 2 | DPP | 87.3 |
| 79 | NCM | - | Part 2 | LTO | - | - | DPPB | 100.0 |
| 80 | NCA | - | Part 2 | LTO | - | - | DPPB | 102.1 |
| 81 | LNMO | - | Part 2 | LTO | - | - | DPPB | 161.1 |
| 82 | LMFP | - | Part 2 | LTO | - | - | DPPB | 189.5 |
| 83 | LFP | - | Part 2 | LTO | - | - | DPPB | 77.3 |
| 84 | NCM | - | Part 2 | Graphite | - | - | DPPB | 129.5 |
| 85 | NCM | - | - | LTO | - | Part 2 | DPPB | 93.1 |
| 86 | NCM | - | - | Graphite | - | Part 2 | DPPB | 133.3 |
| 87 | NCM | - | Part 2 | LTO | - | Part 2 | DPPB | 91.4 |

It should be understood that the columns of "coating form" shown in each of Tables 1 to 4 show coating forms using the pyrrole compound. Respective meanings of "Entirety", "Part 1" and "Part 2" shown in the column of "coating form" are as follows.

The "Entirety" with respect to the positive electrode 33 means that the positive electrode coating film 212 was formed, as shown in FIG. 5. That is, in the preparation process of the positive electrode mixture, since the positive electrode active material was mixed with the pyrrole compound in the state in which the positive electrode binder and the positive electrode conductive agent did not coexist, the positive electrode coating film 212 was formed so as to cover the entire surface of the positive electrode active material particle 211.

The "Entirety" with respect to the negative electrode 34 means that the negative electrode coating film 222 was formed so as to cover the entire surface of the negative electrode active material particle 221, for a reason similar to the "Entirety" with respect to the positive electrode 33.

The "Part 1" with respect to the positive electrode 33 means that a plurality of positive electrode coated particles 215 were formed, as shown in FIG. 7. That is, in the preparation process of the positive electrode mixture, since the positive electrode active material was mixed with the pyrrole compound in the state in which the positive electrode binder and the positive electrode conductive agent coexisted, a plurality of positive electrode coated particles 215 were formed so as to partially cover the surface of the positive electrode active material particle 211.

The "Part 1" with respect to the negative electrode 34 means that the plurality of negative electrode coated particles 225 were formed so as to partially cover the surface of the negative electrode active material particle 221, for a reason similar to the "Part 1" with respect to the positive electrode 33.

The "Part 2" with respect to the positive electrode 33 means that a positive electrode coating film 216 was formed, as shown in FIG. 8. That is, since the pyrrole compound was not used to obtain the positive electrode mixture and the pyrrole compound was contained in the electrolytic solution, the positive electrode coating film 216 was formed so as to partially cover the surface of the positive electrode active material particle 211.

The "Part 2" with respect to the negative electrode 34 means that a negative electrode coating film 226 was formed so as to partially cover the surface of the negative electrode active material particle 221, for a reason similar to the "Part 2" with respect to the positive electrode 33.

### <3. Discussion>

As shown in Tables 1 to 4, the electric resistance characteristic greatly varied depending on the configuration of the lithium ion secondary battery. In the comparison described below, impedance after charging and discharging when the pyrrole compound was not used in each of the production process of the positive electrode 33 and the production process of the negative electrode 34 (Experimental Examples 28 to 33) is used as a comparison reference.

Specifically, in the case where the coating form using the pyrrole compound was "Part 1" (Experimental Examples 34 to 60), impedance after charging and discharging slightly decreased, but the impedance after charging and discharging remained high.

Further, also in the case where the coating form using the pyrrole compound was "Part 2" (Experimental Examples 61 to 87), impedance after charging and discharging slightly decreased, but the impedance after charging and discharging remained high. In this case, rather, impedance after charging and discharging increased more than in the case where the coating form using the pyrrole compound was "Part 1".

On the other hand, when the coating form using the pyrrole compound was "Entirety" (Experimental Examples 1 to 27), impedance after charging and discharging was greatly reduced. In this case, in particular, when the second pyrrole compound (DPP) was used as the pyrrole compound, impedance after charging and discharging was further reduced. Further, when a ternary composite oxide (NCM) was used as the positive electrode active material and a lithium titanium-containing composite oxide (LTO) was used as the negative electrode active material, impedance after charging and discharging was further reduced.

### <4. Summary>

From these facts, in one or both of the positive electrode and the negative electrode, the coating film covered the entire surface of the active material particles, and when the coating film contained the pyrrole compound, the electric resistance characteristic of the lithium ion secondary battery was improved. Accordingly, excellent battery characteristic was obtained in the lithium ion secondary battery.

Although the present technology has been described above with reference to the embodiment and the examples, modes of the present technology are not limited to the modes described in the embodiment and the examples, and are therefore modifiable in a variety of ways.

Specifically, although the description has been given of the cylindrical-type lithium ion secondary battery and the laminated film-type lithium ion secondary battery, the present technology is not limited thereto. For example, it may be another lithium ion secondary battery such as a prismatic lithium ion secondary battery and a coin-type lithium ion secondary battery.

Moreover, although a case where the battery device has a winding structure has been described, the present technology is not limited thereto. For example, the battery device may have another structure such as a laminated structure.

It should be understood that the effects described in the present description are mere examples, and the effects of the present technology are therefore not limited to the effects described in the present description. Accordingly, other effects may be obtained related to the present technology.

Further, it should be understood by those skilled in the art that various modifications, combinations, subcombinations and alterations may occur depending on design requirements and other factors insofar as they are within the scope of the appended claims or the equivalents thereof.

## Claims

1. A lithium ion secondary battery comprising:
an electrolytic solution together with a positive electrode and a negative electrode, wherein
at least one of the positive electrode and the negative electrode includes:
a plurality of active material particles, and
a coating film that covers an entire surface of at least one of the plurality of active material particles, and
the coating film contains at least one of a first pyrrole compound represented by Formula (1), a second pyrrole compound represented by Formula (2) and a third pyrrole compound represented by Formula (3): 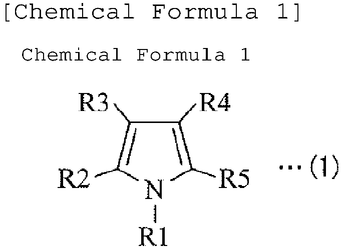 wherein each of R1, R2, R3, R4 and R5 is any one of a hydrogen group, a monovalent hydrocarbon group, a monovalent oxygen-containing hydrocarbon group and a monovalent heterocyclic group, 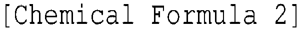 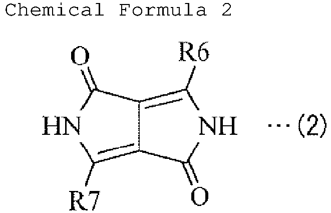 wherein each of R6 and R7 is any one of a hydrogen group, a monovalent hydrocarbon group, a monovalent oxygen-containing hydrocarbon group and a monovalent heterocyclic group, 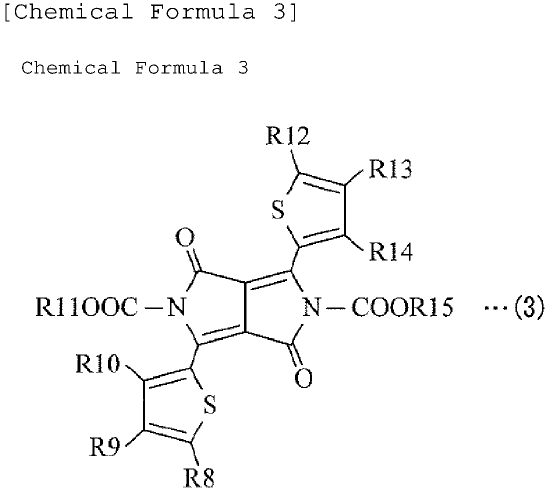 wherein each of R8, R9, R10, R12, R13 and R14 is any one of a hydrogen group, a monovalent hydrocarbon group, a monovalent oxygen-containing hydrocarbon group and a monovalent heterocyclic group, and each of R11 and R15 is either a hydrogen group or a monovalent hydrocarbon group.

2. The lithium ion secondary battery according to claim 1, wherein
the first pyrrole compound contains pyrrole,
the second pyrrole compound contains diketopyrrolopyrrole, and
the third pyrrole compound contains a compound in which each of R8, R9, R10, R12, R13 and R14 is the hydrogen group and each of R11 and R15 is a tertiary butyl group.

3. The lithium ion secondary battery according to claim 1 or 2, wherein the coating film contains diketopyrrolopyrrole.

4. The lithium ion secondary battery according to any one of claims 1 to 3, wherein
at least one of the positive electrode and the negative electrode further includes a plurality of binder particles, and
the coating film further covers an entire surface of at least one of the plurality of binder particles.

5. The lithium ion secondary battery according to claim 4, wherein
at least one of the positive electrode and the negative electrode further includes a plurality of conductive particles, and
the coating film further covers an entire surface of at least one of the plurality of conductive particles.

6. The lithium ion secondary battery according to any one of claims 1 to 5, wherein
the negative electrode includes the plurality of active material particles,
each of the plurality of active material particles included in the negative electrode contains a first composite oxide, and
the first composite oxide contains lithium (Li) and titanium (Ti) as constituent elements.

7. The lithium ion secondary battery according to any one of claims 1 to 6, wherein
the positive electrode includes the plurality of active material particles,
each of the plurality of active material particles included in the positive electrode contains a second composite oxide, and
the second composite oxide contains lithium, nickel (Ni), cobalt (Co) and manganese (Mn) as constituent elements.
